# EUROPEAN PATENT APPLICATION

(11) **EP 1 965 386 A1**
(43) Date of publication of application: **03.09.2008**
(21) Application number: 08150445.8
(22) Date of filing: 21.01.2008
(51) Int. Cl.: G11B 20/10, G11B 27/32, H04N 7/26

(54) **Flag indicating if an MPEG Stream Object SOBU contains no reference picture.**

(30) Priority: 28.02.2007 JP 2007050141
(71) Applicant: Kabushiki Kaisha Toshiba, Minato-ku, Tokyo 105-8001 (JP)
(72) Inventor: Kikuchi, Shinichi, Tokyo 105-8001 (JP); Nakashika, Masahiro, Tokyo 105-8001 (JP)
(74) Representative: Henkel, Feiler & Hänzel

(57) **Abstract**

The invention allows identification of a data recording unit that does not include any reference picture and a data recording unit that includes a reference picture. Specifying information (SOBU_MODE) indicating whether or not a target object (ESOB) includes the data unit (Non-Intra ESOBU) that does not include any reference picture or I-picture is provided in management information associated with that object.

## Description

The invention relates to an information recording medium (or data structure), information recording and reproducing methods, and information recording and reproducing apparatuses, which are suited to record and reproduce a digital stream signal used in digital TV broadcasting and the like.

In recent years, TV broadcasting has entered the era of digital broadcasting having Hi-Vision programs (programs of high-definition AV information) as principal broadcasting content. The current BS digital broadcasting (and forthcoming terrestrial digital broadcasting) adopts an MPEG2 transport stream (to be abbreviated as MPEG-TS hereinafter as needed). In the field of digital broadcasting using moving pictures, the MPEG-TS will be used as a standard format in the future. Upon the initiation of such digital TV broadcasting, market needs for a streamer that can directly record digital TV broadcasting content are increasing.

As an example of a streamer that uses an optical disc such as a DVD-RAM or the like, "an information recording medium, information recording method, information reproducing method, information recording apparatus, and information reproducing apparatus" disclosed in JP-A 2006-302346 (KOKAI) is available.

Since a data object of high-definition AV information has a large information size, its recording needs a large capacity. In order to record high-definition AV information on a recording medium with a limited capacity for a long period of time, a high compression efficiency is demanded. As practical digital encode methods that can obtain such high compression efficiency, MPEG-2, MPEG-4, AVC, and the like are available. Some systems that adopt these digital encode methods allow a data recording unit of an object not including any reference picture (I-picture) with a large information consumption volume.

A data recording unit (Non-Intra ESOBU) that does not include any reference picture (I-picture) and that (ESOBU) which includes a reference picture (I-picture) need different processes upon decoding encoded data in these data recording units. More specifically, a decoder that supports a case with a reference picture and that which supports a case without any reference picture have to be selectively used. (If a data recording unit includes a reference picture, an image for one frame can be decoded using that recording unit alone. However, if a data recording unit does not include any reference picture, an image for one frame cannot be decoded unless a plurality of recording units are grouped together.) Hence, assuming a system that allows the presence of a data recording unit without any reference picture or I-picture, the need for identifying a data recording unit that does not include any reference picture, and that which includes a reference picture as needed arises.

One aspect of the invention is to identify a data recording unit that either includes or does not include a reference picture.

In one embodiment of the invention, specific information (SOBU_MODE or ENTRY_flag) indicating whether or not a target object (ESOB) includes a data recording unit, access unit, or decode unit (Non-Intra ESOBU) which does not include any reference picture or I-picture is provided in management information (HR_SFInn.IFO or HR_STMnn.IFO) associated with that object.

An object including a data recording unit (or an access unit or decode unit) without any reference picture can be identified from that which includes a data recording unit with a reference picture.

The invention can be more fully understood from the following detailed description when taken in conjunction with the accompanying drawings, in which:
FIG. 1 is an exemplary view for explaining the data structure according to an embodiment of the invention;
FIG. 2 is an exemplary view for explaining the relationship among a reproduction management information layer, object management information layer, and object layer in the data structure according to the embodiment of the invention;
FIG. 3 is an exemplary view for explaining an example of the configuration of a field (ESTR_FIT) of management information recorded on AV data management information recording area 130;
FIG. 4 is an exemplary view for explaining an example of the configuration of another field (STMAPT) of management information recorded on AV data management information recording area 130;
FIG. 5 is an exemplary view for explaining an example of the configuration of a part of a file structure of management information and management information (ESTR_FI) corresponding to a management information file (HR_SFInn.IFO) in that file structure;
FIG. 6 is a view for explaining an example of the configuration of a field (ESOBI_GI) of management information;
FIG. 7 is an exemplary view for explaining a case in which a set (ESOBU cluster) of data units of a recording object (ESOB) does not include any Non-Intra ESOBU;
FIG. 8 is an exemplary view for explaining a case in which a set (Non-Intra ESOBU cluster) of data units of a recording object (ESOB) includes Non-Intra ESOBUs;
FIG. 9 is a view for explaining an example of the configuration of a stream time map information table (a presentation time-based STMAPIT of type A) as a part of management information;
FIG. 10 is an exemplary view for explaining an example of the configuration of entry information (ESOBU_ENT of type A) of a data unit as a part of management information;
FIG. 11 is an exemplary block diagram for explaining an example of an apparatus for recording and reproducing AV information (digital TV broadcasting program and the like) on and from an information recording medium (optical disc, hard disc, or the like) using the data structure according to the embodiment of the invention;
FIG. 12 is an exemplary flowchart (overall operation processing sequence) for explaining an example of the overall operation of the apparatus;
FIG. 13 is an exemplary flowchart (edit operation processing sequence) for explaining an example of edit processing (ST28);
FIG. 14 is an exemplary flowchart for explaining an example of a video recording operation;
FIG. 15 is an exemplary flowchart for explaining an example of management information generation processing;
FIG. 16 is an exemplary flowchart for explaining an example of time map setting processing;
FIG. 17 is an exemplary flowchart for explaining an example of a reproducing operation;
FIG. 18 is an exemplary flowchart for explaining an example of title reproduction determination processing;
FIG. 19 is an exemplary flowchart for explaining an example of skip processing;
FIG. 20 shows a practical example of navigation data for ISDB (a part of management data) of Japan;
FIG. 21 shows a practical example of navigation data for ATSC and cable distribution (a part of management data) used in U.S.A.; and
FIG. 22 shows a practical example of navigation data for a manufacturer mode (a part of management data).

Various embodiments according to the invention will be described hereinafter with reference to the accompanying drawings.

Various embodiments of the invention will be described hereinafter with reference to the accompanying drawings. An MPEG-TS scheme as a basic format common to broadcasting schemes which broadcast (distribute) compressed moving picture data such as digital TV broadcasting, broadcasting that uses a wired network such as the Internet or the like, and so on is divided into a packet management data field and payload. The payload includes data to be reproduced in a scrambled state. According to ARIB, a PAT (Program Association Table), a PMT (Program Map Table), and SI (Service Information) are not scrambled. Also, various kinds of management information are generated using the PMT and the SI (SDT: Service Description Table, EIT: Event Information Table, BAT: Bouquet Association Table). The content to be reproduced include MPEG video data, Dolby AC3 audio data, MPEG audio data, data broadcasting data, and the like. Also, the content includes information needed upon reproduction such as a PAT, a PMT, SI, and the like (program information etc.) although they are not directly related to the content to be reproduced. The PAT includes the PID (Packet Identification) of the PMT for each program, and the PMT records the PIDs of video data and audio data.

A normal reproducing sequence of an STB (Set Top Box) is as follows. That is, when the user determines a program using electronic program guide information (EPG information), the PAT is loaded at the start time of the target program. The PID of a PMT, which belongs to the desired program, is determined based on that data. The target PMT is read out in accordance with that PID, and the PIDs of video and audio packets to be reproduced, which are included in the PMT, are determined. Video and audio attributes are read out based on the PMT and SI and are set in respective decoders. The video and audio data are extracted and reproduced in accordance with their PIDs. Note that the PAT, PMT, SI, and the like are transmitted at intervals of several 100 ms since they are also used during reproduction. The standard for recording such stream (especially, a stream of satellite or terrestrial digital broadcasting) has been created as the HD_DVD-VR standard by the DVD forum, and a High-definition digital video recorder based on this standard is already commercially available.

Note that different digital broadcasting schemes are adopted in respective countries: for example, DVB (Digital Video Broadcasting) in Europe; ATSC (Advanced Television Systems Committee) in U.S.A.; and ARIB (Association of Radio Industries and Businesses) in Japan.

In DVB, the video format is MPEG-2, the resolutions are 1152*1440i, 1080*1920 (I, p), 1035*1920, 720*1280, (576, 480)*(720, 544, 480, 352), and (288, 240)*352, the frame frequencies are 30 Hz and 25 Hz, the audio format includes MPEG-1 audio and MPEG-2 Audio, and the sampling frequencies are 32 kHz, 44.1 kHz, and 48 kHz.

In ATSC, the video format is MPEG-2, the resolutions are 1080*1920 (I, p), 720*1280p, 480*704 (I, p), and 480*640 (I, p), the frame frequencies are 23.976 Hz, 24 Hz, 29.97 Hz, 30 Hz, 59.94 Hz, and 60 Hz, the audio format includes MPEG1 Audio Layer 1 & 2 (DirecTV) and AC3 Layer 1 & 2 (Primstar), and the sampling frequencies are 48 kHz, 44.1 kHz, and 32 kHz.

In ATSC, there are several types of streams even in U.S.A., which include a stream without any I-picture. In such case, a display image is obtained by decoding a plurality of pictures. For example, in the case of MPEG-2, a plurality of P-pictures are prepared and decoded, thus reproducing a video picture, but display does not start until an image to be reproduced is prepared for one frame (in this case, since there is no I-picture, the image quality of an image to be displayed is low). Note that in the scheme such as MPEG-4 AVC, VC-1, or the like, a frame includes intra-blocks, and a plurality of their pictures are prepared and decoded, thereby reproducing a video picture.

In ARIB, the video format is MPEG-2, the resolutions are 1080i, 720p, 480i, and 480p, the frame rates are 29.97 Hz, 59.94 Hz, and 60 Hz, the audio format includes AAC (MPEG-2 Audio), and the sampling frequencies are 48 kHz, 44.1 kHz, 32 kHz, 24 kHz, 22.05 kHz, and 16 kHz.

In this manner, digital broadcasting schemes are different in different countries, and may also be different for respective broadcasting stations even within each country. For this reason, a recorder for recording digital broadcasting needs to record and manage video recording data (objects) as files in accordance with each individual digital broadcasting scheme to be used. In HD_DVD-VR, one or more management information files (HR_SFInn.IFO, HR_SFInn.bup: nn is an arbitrary integer) can exist, and a management information file can be added for one or more types of broadcasting schemes. If a broadcasting scheme is unknown or if a recorder does not support a given broadcasting scheme, nn = 0, and data is stored as a type B stream (ESOB_STRB).

In MPEG, reproducing processing is executed focusing on I-pictures (Intra-Picture: intra-frame encoded image). This is because each I-picture can configure an image for one frame. However, some digital broadcasting schemes do not include any I-picture. In this case, a decoder which supports a case without any I-picture is needed. For this reason, identification information that identifies if a scheme allows the absence of an I-picture in an object (ESOB) is needed in terms of management of the recorded object.

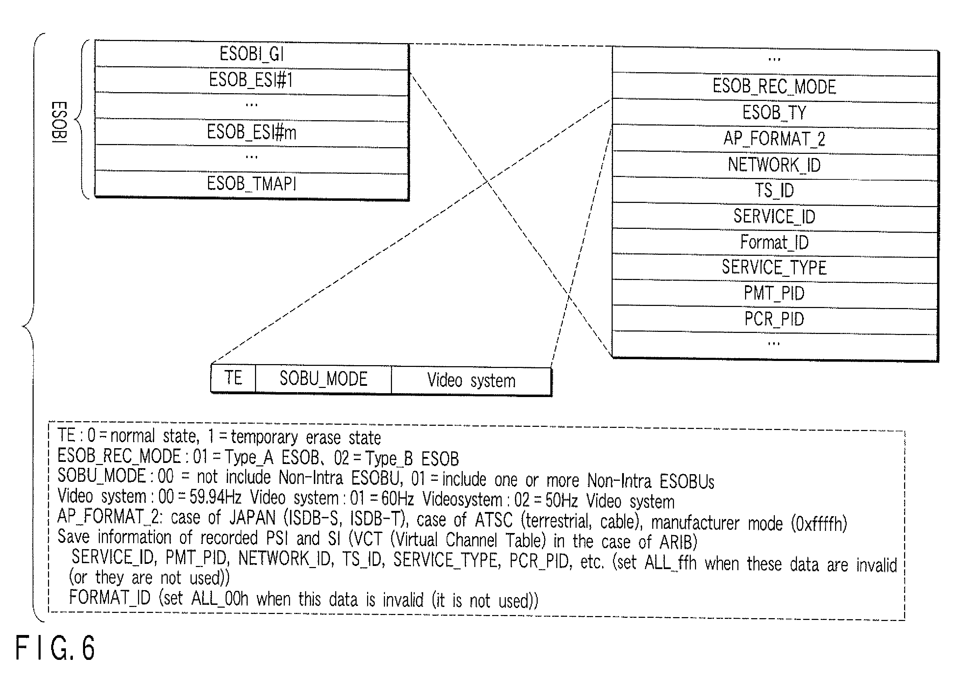

For this reason, in the embodiment of the invention, information indicating whether or not a data unit (Non-Intra ESOBU) without any I-picture is included can be saved in an ESOB_TY/SOBU_MODE (see FIG. 6 etc.) in given management information (ESOB_GI). Note that a data unit including an I-picture (intra-frame encoded image) is called an Intra ESOBU (or simply ESOBU) and is distinguished from the Non-Intra ESOBU. In MPEG-4 AVC or VC-1, there is a Reference Picture corresponding to an I-picture. In the embodiment of the invention, both the I-picture of MPEG-2 and the reference picture of MPEG-4 AVC and the like are handled as reference pictures. That is, a data unit that does not include any reference picture of MPEG-4 AVC or the like is also handled as a Non-Intra ESOBU.

There are two types of content (recording objects) to be handled in HD_DVD-VR, i.e., an EVOB for analog broadcasting or an analog input and an ESOB for digital broadcasting. The ESOB is further classified into cognizable (or analyzable) content (TYPE_A_ESOB) and non-cognizable (or non-analyzable) content (TYPE_B_ESOB). Furthermore, the TYPE_A_ESOB is classified according to respective broadcasting schemes (JAPAN_ISDB, ARIB, DVB, and the like) and a manufacture mode, and is set with corresponding values according to the respective schemes and mode. The EVOB is created based on a PS (Program Stream), and the ESOB is created based on a TS (Transport Stream).

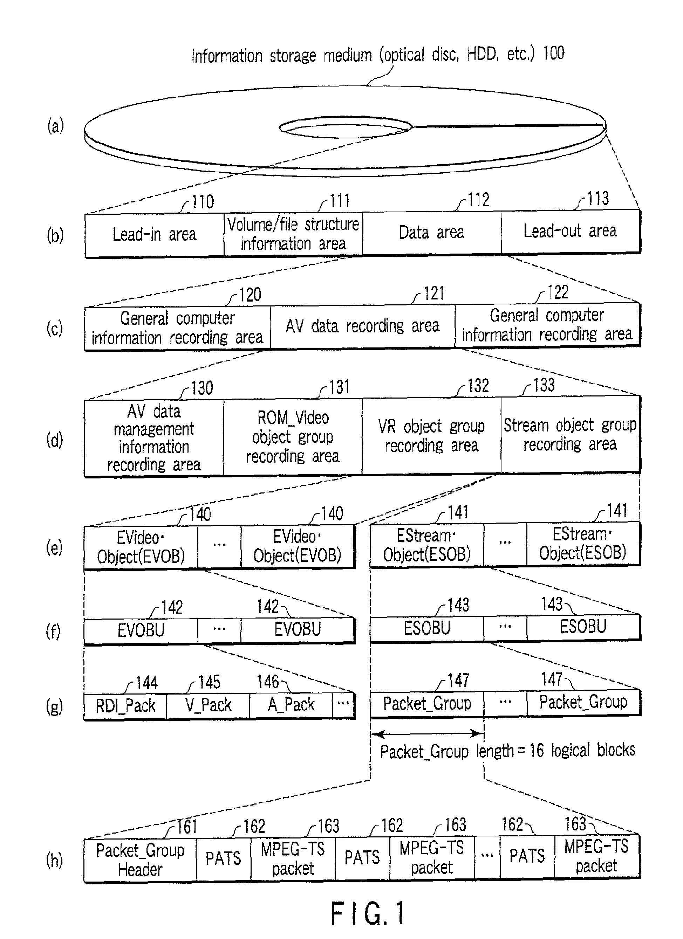

FIG. 1 is an view for explaining the data structure according to an embodiment of the invention. As a typical example of a Recordable or Re-writable information recording medium, a DVD disc (DVD±R, DVD±RW, DVD-RAM, or the like which has a single recording layer or multiple recording layers using a red laser of a wavelength around 650 nm or a blue-violet or blue laser of a wavelength of 405 nm or less) 100 is known. As shown in FIG. 1, this disc 100 is configured to include volume/file structure information area 111 that stores a file system, and data area 112 that actually records data files. The file system includes information indicating the recording locations of files.

Data area 112 includes areas 120 and 122 recorded by a general computer, and area 121 that records AV data. AV data recording area 121 is configured to include AV data management information area 130 that stores a video manager (VMG) file used to manage AV data, ROM_Video object group recording area 131 that records a file of object data complying with the DVD-Video (ROM Video) standard, VR object group recording area 132 that records a file (VRO file) of object data (EVOBS: Extended Video Object Set) complying with the video recording (VR) standard, and recording area 133 that records a stream object data (ESOBS: Extended Stream Object Set) file (SRO file) which records objects compatible to digital broadcasting. Note that the recording standard for the SRO file will be described as a stream recording (SR) standard as needed.

Note that different file directories are prepared in correspondence with formats (e.g., video title set (VIDEO-TS) for DVD-Video (ROM Video) and DVD-RTAV for recordable/reproducible DVD (DVD-RTR), and a new DVD standard file compatible to digital broadcasting to be described in this embodiment is recorded in, e.g., a DVD_HDVR directory. That is, the DVD_HDVR directory records a VMG file used to manage data, VRO files as object files for analog recording of analog broadcasting data, line-in data, and the like, and an SRO file as a digital broadcasting object. The SRO file records an ESOBS.

In the configuration shown in FIG. 1, one ESOBU 143 is configured by one or more Packet Groups 147. Each Packet Group 147 corresponds to, e.g., 16 (or 32) packs (1 pack = 1 Logical Block: 2048 bytes), and is configured by Packet Group Header 161 and a plurality of TS packets 163 (170 packets). The Arrival Time of each TS packet can be expressed by PATS (Packet Arrival Time Stamp: 4 bytes) 163 allocated before that TS packet.

Packet Group Header 161 allocated at the head of Packet Group 147 is set with a Header_ID (0x00000FA5), and is configured to include packet group general information PKT_GRP_GI, Copy Control Information CCI or Content Protection Information CPI, and Manufacturer's Information MNI or MNFI (none of them are shown).

The arrival times of TS packets need to be linearly counted up until a video recording end time to have a video recording start time as 0 (or a predetermined value). Note that an STC (System Time Counter) and the PATS may not always indicate the same value (due to different initial values or the like). However, the count interval of a PATS counter may be synchronized with that of an STC counter which corresponds to the interval between neighboring PCR (Program Clock Reference) fetch timings in a reproduction synchronized state. Note that the PCR is included in an adaptation field (not shown) in an MPEG-TS. A Packet Group can include a maximum of two ESOBs. That is, Packet Groups need not be aligned for respective ESOBs.

Note that the lower 4 bytes unique to each PATS are included in that PATS, but the upper 2 bytes of the first PATS are included in First_PATS_EXT described in the packet group general information (PKT_GRP_GI: not shown) in Packet Group Header 161. With this configuration, the data size can be reduced compared to a case wherein 6-byte packet arrival times are independently described in respective PATS data.

Although not shown, the PKT_GRP_GI includes packet group type PKT_GRP_TY (1 = MPEG-TS), Packet Group version number VERSION, status information PKT_GRP_SS of the Packet Group, and the number Valid_PKT_Ns of valid packets in the Packet Group, upper 2 bytes FIRST_PATS_EXT of the PATS for the first packet, and the like.

Furthermore, the PKT_GRP_SS includes bit STUF indicating if stuffing is done (if this STUF bit is set, it indicates that the Valid_PKT_Ns assumes a value other than 0xAA), and PATS_SS. Note that the PATS_SS includes a value indicating the accuracy of the PATS (when PATS SS = 00, both PATS and FIRST_PATS_EXT are valid and accuracy = 6 bytes is set; when PATS_SS = 01, only PATS is valid and accuracy = 4 bytes is set; and when PATS_SS = 10, both PATS and FIRST_PATS_EXT are invalid and no accuracy is set).

Note that extended bytes FIRST_PATS_EXT of the PATS of the first packet include the upper 2 bytes of the arrival time of the packet allocated at the head of the packet group, and the remaining 4 bytes are assigned before each packet. In this manner, the reproducing processing with more accurate time is allowed, or more accurate reproduction processing is enabled, as regards timing.

Packet Group Header 161 includes a description location of CP_CTL_INFO (copy control information: to be abbreviated as CCI or CPI as needed) (not shown). The CP_CTL_INFO is stored in CCI (or CPI) or the like in Packet Group Header 161, and executes copy control of each Packet Group at the location of Packet Group Header 161. The values of this CCI (or CPI) are set by a digital copy control descriptor and content use descriptor. The contents of the CCI are: for example, CGMS (0 = copy never; 1 = copy free); APS (0 = no APS, 1 = append APS type 1, 2 = append APS type 2, 3 = append APS type 3); EPN (0 = content protection (Internet output protection), 1 = no content protection); and ICT (0 = resolution constraint, 1 = no constraint).

Alternatively, CCI (or CPI) includes digital copy control (00 = copy never, 01 = copy once, 11 = copy free), analog copy control (00 = no APS, 01 = APS type 1, 10 = APS type 2, 11 = APS type 3), EPN (0 = content protection, 1 = no content protection), and ICT (0 = analog video output resolution constraint, 1 = no constraint). Note that APS is an abbreviation for "Analog Protection System", and this embodiment assumes Macrovision(R).

Also, the copy control information (CCI or CPI) is set on the management information side (ESOBI_GI) to perform copy management (copyright management) for the whole system, or the CCI (or CPI) is set on both the management information side and the object side (Packet Group) to perform copy management (copyright management) in two levels (management information and object) in preference to the object side (Packet Group). More specifically, a title menu uses the CCI of the ESOBI_GI, and an actual apparatus operation can execute processing in preference to the Packet Groups.

The structure of each stream object set ESOBS recorded in stream object group recording area 133 in FIG. 1 includes one or more ESOBs 141. Each ESOB corresponds to, e.g., one program of TV broadcasting. ESOB 141 includes one or more ESOBUs (Extended Stream object units) 143, each of which corresponds to object data for a given time interval (which changes depending on the value of an ESOBU_PB_TM_RNG (not shown)) or one or more GOP data. (Note that the ESOBU_PB_TM_RNG is included in time map information ESOB_TMAPI in ESOBI to be described later.)

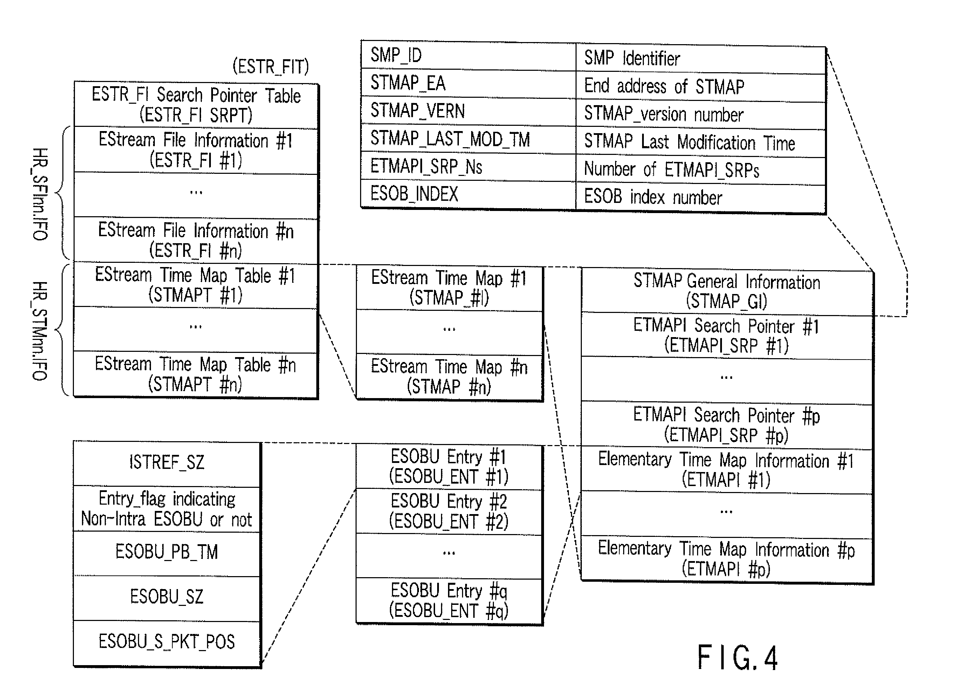

When the transfer rate is low, one GOP data cannot often be sent within is (1 second) (GOP data can be freely set in VR owing to internal encoding, but the next incoming data cannot be specified in the case of digital broadcasting since encoding is done by a broadcasting station). In this case, ESOBUs are delimited into 1 sec. time intervals, and 1STREF_SZ = 0 is set in the delimited ESOBU to indicate the absence of a reference picture. In this case, ESOBUs that cannot be used in random access are generated. For this reason, an ESOBU including the head of a randomly accessible picture is called an entry ESOBU (ESOBU_ENT) and is distinguished from that which does not allow any random access. Note that the information field of the 1STREF_SZ is assured in an ESOBU_ENT (see FIG. 4) in a stream time map (STMAP) included in a stream file information table ESTR_FIT).

On the other hand, the transfer rate may be high, and I-picture data may be sent frequently. In such case, ESOBUs are delimited frequently, and ESOBU management information increases accordingly, thus ballooning the whole management information. For this reason, it is appropriate to delimit ESOBUs (other than the last ESOBU of an ESOB) by a given time interval (e.g., for each is: a delimitation unit = a picture unit) determined based on the total recording time or by one or more GOP data.

Note that different directories are prepared for respective formats, such as a VIDEO-TS directory for DVD video (ROM video) and a DVD-RTAV directory for DVD-RTR (recordable/reproducible DVD), and data of the HD_DVD-VR standard are recorded in a DVD_HDVR directory. That is, HR_MANGR.IFO is stored in the DVD_HDVR directory, and EVOB object files and TMAP files: HR_Vmmmm.MAP (mmmm includes the same numbers as those of VOB_INDEX: 1 to 1998) for respective EVOBs are stored in an HDVR_VOB directory under the DVD_HDVR directory. Also, ESOB object files, ESOB (AT_SOB) management files: HR_SFInn.SFI (when nn = 00, type B; when nn = 01 to Oxff, type A), and TMAP files: Snn_mmmm.SMP (when nn = 00, type B, when nn = 01 to 0xff, type A; mmmm includes the same numbers as those of EVOB (AT_SOB)_INDEX: 1 to 1998) for respective ESOBs are stored in an HDVR_SOB directory.

The structure of each ESOBS includes one or more ESOBs, each of which corresponds to, e.g., one program. One ESOB includes one or more ESOBUs (Extended Stream object units), each of which corresponds to object data for a given time interval (which changes depending on the value of the ESOBU_PB_TM_RNG) or one or more GOP data. When management information is formed on the PATS base in the case of a non-cognizable stream, AT_SOBUs are delimited at time intervals indicated by AT_SOBU_TM data. There are two types of AT_SOBU_TM data: it is designated in seconds or by a 27-MHz count value.

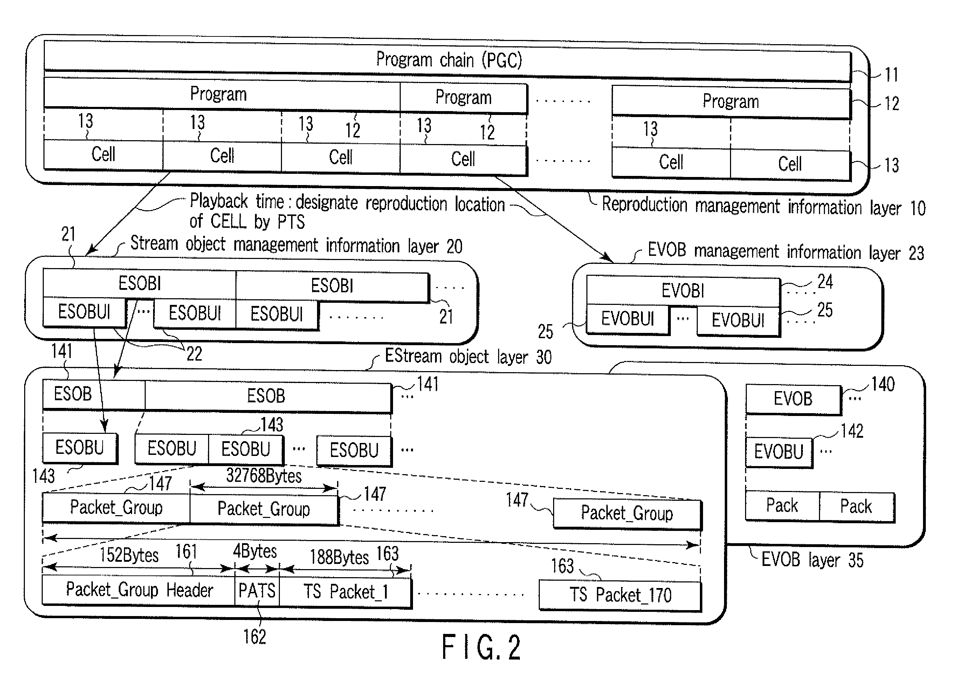

FIG. 2 is a view for explaining the relationship among a reproduction management information layer, object management information layer, and object layer in the data structure according to the embodiment of the invention. As shown in FIG. 2, SR management data is recorded in a file common to VR, and undergoes control common to VR. SR and VR data are linked for respective cells, and the reproduction location is designated for each reproduction or playback time. This management data is called VR_MANGER.IFO.

In FIG. 2, one ESOBU includes one or more Packet Groups, each of which corresponds to 16 Logical Blocks (32768 bytes when 1 LB = 2048 bytes). Each Packet Group includes a Packet Group Header and (170) TS packets. The arrival time of each TS packet is expressed by a PATS (Packet Arrival Time Stamp: 4 bytes) which is allocated before each TS packet.

The arrival times of TS packets need be linearly counted up until a video recording end time to have a video recording start time as 0 (or a predetermined value). Note that the STC and PATS may not always indicate the same value (due to different initial values or the like). However, the count interval of a PATS counter may be synchronized with that of an STC counter which corresponds to the interval between neighboring PCR fetch timings in a reproduction synchronized state. But a Packet Group can include a maximum of two ESOBs. That is, Packet Groups need not be aligned for respective ESOBs. Furthermore, the Packet Group Header is set with a Header_ID at the head of a Packet Group, and includes PKT_GRP_GI, CCI: Copy Control Information, and MNI (Manufacturer's information), which follows the Header_ID.

PGC information as playback information has the same format as a normal VR format, and ORG_PGC information is automatically generated by an apparatus upon video recording and is set in the order of video recording. UD_PGC information is generated according to a reproducing order which is freely added by the user, and is called a PLAYLIST. These two formats have a common format in PGC level. Note that PG information saves update date information of this PG. This information can identify when this PG was edited. Note that the PG number is an absolute number from the beginning of recording on this disc, and is an index number which remains unchanged even after other PGs are deleted.

Furthermore, in CELL information, types A and B are added to a CELL type, and this information designates an ESOBI_SRP number, start time, end time, and an ESI number of a default Video stream to be reproduced. The start and end times may be expressed by either the playback time (in the case of the PTM base) or PATS time (in the case of the PATS base).

When time is designated by a playback time: real time upon reproduction, the same access method as in conventional VR is allowed. In this case, since the user can designate a recording position using a playback time, a user's desire can be perfectly reflected. However, this method can be adopted only when the stream content can be sufficiently cognizable. If the content of the recorded stream are not sufficiently cognizable, a time can only be designated using a transfer time unit. If the recording position is designated using a playback time, reproduction cannot always be started from the head of I-picture data. If a frame at the playback start position is not that of I-picture, decoding starts from the immediately preceding I-picture, and display starts when the target frame is decoded. In this way, a picture can be presented to the user as if reproduction were started from the designated frame.

By assigning a unique ID number (PG_INDEX) to each PG, the PG data can be designated using numbers which remain unchanged even when middle PGs are deleted. The CELL is set with the ESTR_FI number and ESOBI_SRP number to be reproduced.

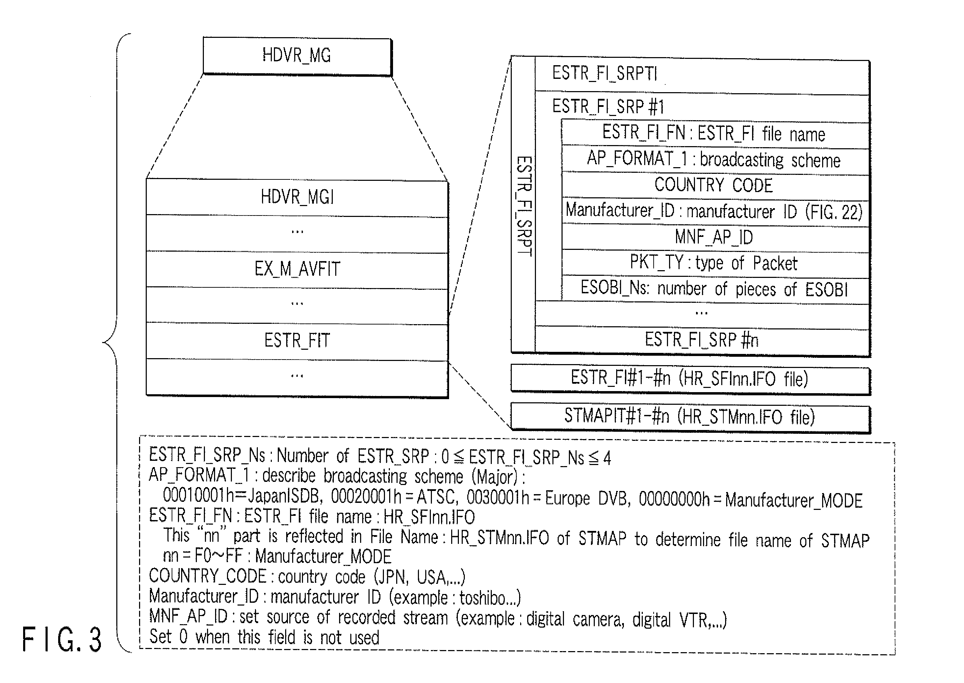

FIG. 3 is a view showing an example of the configuration of a field (ESTR_FIT) of management information recorded in AV data management information recording area 130. In an HDVR directory, HR_MANGR.IFO as a DVD management information file, VRO files as analog video object files, and SRO files compatible to digital broadcasting are stored. A VMG file as management information is prepared by adding an ESTR_FIT (Extended Stream File Information table) to the management information of the conventional DVD-VR standard.

Management information of stream data is saved in the VMG, and is managed on the same level as VR data. Stream management information is saved in the ESTR_FIT (Extended Stream File Information Table). The ESTR_FIT includes a ESTR_FI_SPRT, a plurality of pieces of ESTR_FI, and STMAPIT. The ESTR_FI_SPRT includes ESTR_FITI (ESTR_FIT Information) and one or more ESTR_FI_SRPs.

The ESTR_FITI includes the total number of pieces of ESTR_FI, and the end address of this table. Each ESTR_FI_SRP includes the file name of ESTR_FI (ESTR_FI_FN: ESTR_FI_file_name), the edit update time of the ESTR_FI file (ESTR_FI_LAST_MOD_TM: not shown), AP_FORMAT_1 (broadcasting scheme: Major categories: Japan_ISDB, ATSC, EU_DVB, etc.), a country code of video recording (Country code: JPN = Japan), a packet type (PKT_TY: 1 = MPEG-TS), the number of pieces of ESOBI (ESOBI_Ns: the number of pieces of ESOBI or the number of pieces of AT_SOBI), an ESTR_FI file size (not shown), the total size of an STMAP (not shown), and the like. In order to indicate that the stream is a stream of the manufacturer mode, a special code (e.g., 00000000h) is set in the AP_FORMAT_1. Furthermore, each RSTR_FI_SRP additionally includes an ID indicating the manufacturer of the apparatus (recorder), i.e., Manufacturer_ID (e.g., TOSHIBO; or TOSHIBO & MEC in the case of a joint ID of a manufacturer group in place of a single manufacturer), and an ID which can be freely set by each manufacturer, i.e., MNF_AP_ID (e.g., a character indicating the location of a source such as a digital camera recorder, digital VCR, and the like), and so forth. In this way, the format of ESTR_FI can be determined without opening it (independent file), and whether or not that format is supported by the recorder can be checked.

FIG. 4 is a view showing an example of the configuration of another field (STMAPT) of management information recorded in AV data management information recording area 130. The ESTR_FIT includes ESTR_FI search pointer table ESTR_FI_SPRT, one or more pieces of stream file information ESTR_FI#1 to ESTR_FI#n, and one or more stream time map tables STMAPT#1 to STMAPT#n. Each STMAPT is configured to include one or more stream time maps STMAP#1 to STMAP#n. Each STMAP is configured to include stream time map general information STMAP_GI, one or more elementary time map information search pointers ETMAPI_SRP#1 to ETMAPI_SRP#n, and one or more pieces of elementary time map information ETMAPI#1 to ETMAPI#n. Each ETMAPI is configured to include one or more stream object unit entries ESOBU_ENT#1 to ESOBU_ENT#n.

The STMAP_GI is configured to include an identifier (SMP_ID) of a corresponding stream time map, the end address (STMAP_EA) of that time map, the version (STMAP_VERN) of that time map, the latest update time (STMAP_LAST_MOD_TM) of that time map, the number (ETMAPI_SRP_Ns) of ETMAPI search pointers, an index number (ESOB_INDEX) of a corresponding stream object, and the like.

Each ESOBU_ENT is configured to include 1STREF_SZ that describes the size of the first reference picture (1-picture in the case of MPEG-TS) of the ESOBU of interest, ESQBU_PB_TM that describes the playback time of the ESOBU of interest, ESOBU_SZ that describes the size of the ESOBU of interest, ESOBU_S_PKT_POS that describes the start packet position of the ESOBU of interest, and the like. This ESOBU_ENT can include a flag (Entry_flag) indicating whether or not a corresponding stream object unit (data unit, access unit, or decode unit) is a Non-Intra ESOBU, which will be described later.

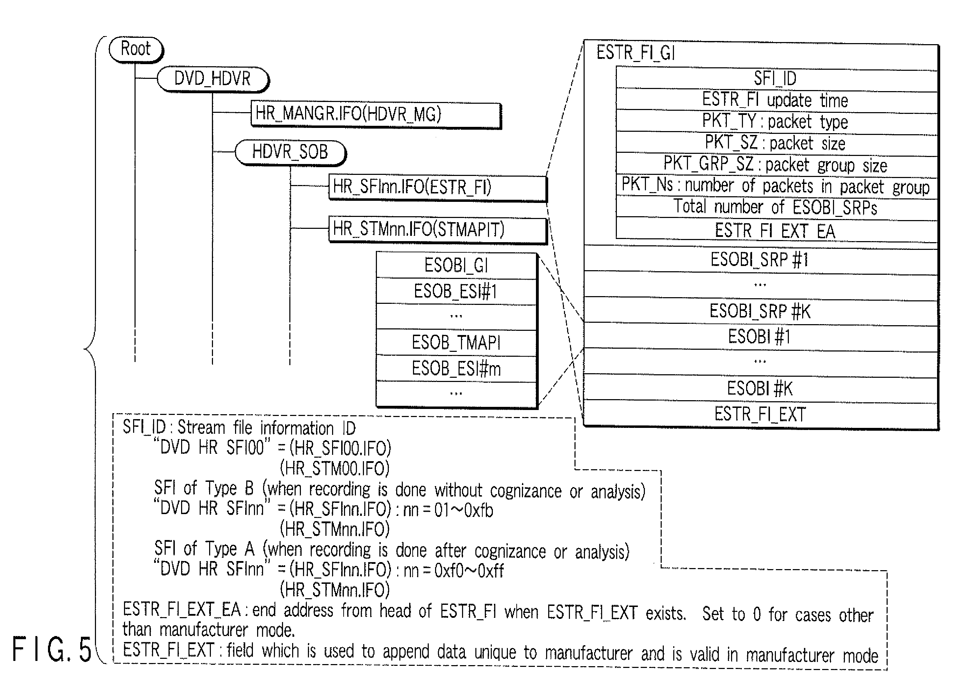

FIG. 5 is a view for explaining an example of the configuration of a part of a file structure of management information and management information (ESTR_FI) corresponding to a management information file (HR_SFInn.IFO) in that file structure. The ESTR_FI is configured to include ESTR_FI_GI (General Information), one or more ESOBI_SRPs (Stream Object Information Search Pointers), pieces of ESOBI (ESOB Information) which are as many as the ESOBI_SRP#ks and are indicated by their values, and ESTR_FT_EXT which is a field used to append data unique to a manufacturer (manufactere unique information) to the ESTR_FI and is valid in the case of the Manufacturer_Mode, and the like.

The ESTR_FI_GI is configured to additionally include the file name/file number (SFI_ID) of an object managed by the ESTR_FI of interest, the number of ESOBI_SRPs in the ESTR_FI of interest, the Version number of the file of interest, PKT_TY (1 = MPEG-TS), PKT_GP_SZ (a packet group size: fixed to 16 Logical Blocks), PKT_Ns (the number of TS packets in a packet group: 0xAA: fixed to 170 TS packets), the STMAP update time, an STMAP size, and the like. Furthermore, the management information is added with the ESTR FI EXT as needed to save data there, and the end address of the ESTR_FI_EXT from the head of the ESTR_FI is set in an ESTR_FI_EXT_EA. If no ESTR_FI_EXT is used, 00000000h is set in the ESTR_FI_EXT_EA.

Note that M_VOBI describes update date and time information (VTMAP_LAST_MOD_TM: not shown) of each VTMAPT as a TMAP (Time Map) for Video Recording (VR) that records and reproduces analog sources by a self apparatus. Also, the STMAP_GI in FIG. 4 describes update date and time information (STMAP_FI_LAST_MOD_TM) of each STMAPT as a TMAP (Time Map) for Stream Recording (SR) that records and reproduces digital broadcasting. The values of these pieces of update date and time information are compared to update date and time information (ESTR_FI update time in FIG. 5) described in each TMAPT file, and if they are equal to each other, it is determined that consistency is assured, thus executing processing.

FIG. 6 is a view for explaining an example of the configuration of a field (ESOBI GI) of management information ESOBI. The ESOBI (Extended Stream Object Information) is configured to include ESOBI_GI (General Information), ESOB_ESI (Elementary Stream Information), ESOB_DCNI (Discontinuity Information), ESOB_CONNI (Connect Information), and ESOB_TMAP (Time Map).

The ESOBI_GI describes ESOB_REC_MODE, ESOB_TY, AP_FORMAT_2 (Minor: 1 = ISDB-S: BS/CS broadcasting, 2 = ISDB-T: terrestrial digital broadcasting, 0xff: other (which is set in a stream according to the embodiment of the invention)), video recording start date and time (EVOS_REC_TM), video recording time period (ESOB_DURATION (not shown): ALL 0xff if no valid value is available), start time (ESOB_S_PTM/S_PATS (not shown)), end time (ESOB_E_PTM/E_PATS (not shown)), and the like. The ESOB_TY describes a Temporary Erase (TE) flag indicating whether or not a temporary erase state is set, SOBU_MODE indicating whether or not a Non-Intra ESOBU is included, information of the adapted Video System, and the like.

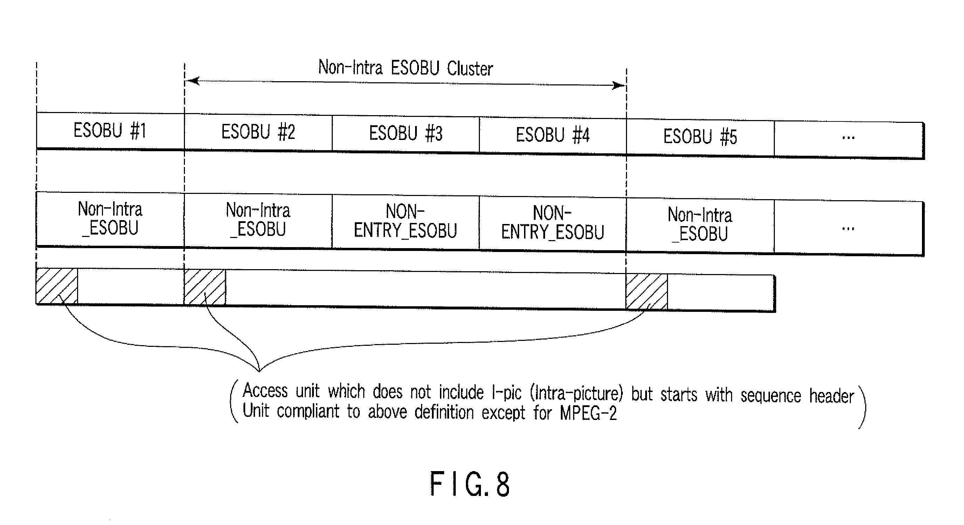

The SOBU_MODE is set to be, e.g., 00 when an ESOBU cluster (to be described later with reference to FIG. 8) does not include any Non-Intra ESOBU, and 01 when the cluster includes one or more Non-Intra ESOBUs.

The ESOBI_GI can further describe SERVICE_ID, PTM_PID, NETWORK_ID, TS_ID, FORMAT_ID, SERVICE_TYPE, PCR_PID, and the like based on PSI and SI values. In the case of broadcast video recording of ARIB, the ESOBI_GI saves a Virtual Channel Table (VCT) as information of PSI and SI.

Furthermore, the ESOBI_GI is configured to additionally include ESOB_ES_Ns (the number of ESs selected for video recording), ESOB_V_ES_Ns (the number of ESs for which TMAP data are generated of recorded video ESs), ESOB_A_ES_Ns (the number of ESs for which TMAP data are generated of recorded audio ESs), ESOB_ID (a serial number unique to an ESOB), Manufacturer_DATA (a field that each manufacturer can freely set), and the like, although not shown. However, type B and a stream according to the embodiment of the invention may be recorded without being cognized. In such case, since it is determined that the PSI and SI values are unknown (or unreliable), the SERVICE_ID, PTM_PID, NETWORK_ID, TS_ID, FORMAT_ID, SERVICE_TYPE, PCR_PID, and the like cannot be described. In such case, a flag indicating the invalidity of information of PSI and SI can be set in a bit (b12) of the ESOB_TY. If that flag is set, the values of the SERVICE_ID, PTM_PID, NETWORK_ID, TS_ID, FORMAT_ID, SERVICE_TYPE, and PCR_PID are invalid. Alternatively, in place of the whole flag, an invalid value (0xff) may be set for each of the values of the SERVICE_ID, PTM_PID, NETMORK_ID, TS_ID, FORMAT_ID, SERVICE_TYPE, and PCR_PID, and that value is set if they are invalid. Note, however, that the PSI and SI values may often be valid even in type B.

The ESOB_REC_MODE (FIG. 6) indicates the type of stream: 01 = TYPE_A_ESOB, and 02 = TYPE_A_ESOB. Type A is a stream whose stream structure is cognizable, and whose management information is managed on the playback time (PTM) base. On the other hand, Type B is a stream whose stream structure is not cognizable and, hence, whose management information is managed on the packet arrival time (PATS) base. For this reason, Type A adopts a TMAP on the PTM base, and Type B adopts a TMAP on the PATS base.

The ESOB_ESI describes ESOB_ES_PID (the PID of an ES), STREAM_TYPE (STREAM type indicated in the PMT), ES_Index (the value of COMPONENT_TAG indicated by the component descriptor, or a value uniquely and appropriately assigned by this apparatus), and the like. In the case of a Video stream, the ESOB_ESI describes a Video compression mode (the type of compression mode: 1 = MPEG-1, 2 = MPEG-2, 3 = MPEG-4_AVC, 4 = VC-1,...), Aspect Ratio (0 = 4 : 3, 1 = 16 : 9), Source resolution (0 = 352*240 (288), 1 = 352*480 (576), 2 = 480*480 (576), 3 = 544*480 (576), 4 = 704*480 (576), 5 = 720*480 (576), 8 = 1280*720, 9 = 960*1080, 10 = 1280*1080, 11 = 1440*1080, 12 = 1920*1080, 16 = 640*480 (576), 17 = unspecified (Horizontal)*240 (288) (Vertical), 18 = unspecified (Horizontal)*480 (576) (Vertical), 19 = unspecified (Horizontal)*720 (Vertical), 20 = unspecified (Horizontal)*1080 (Vertical), 1fh = unspecified), Source picture progress mode (0 = Interlace, 1 = Progressive, 3 = unspecified), frame rate (1 = 24/1.001, 2 = 24, 3 = 25, 4 = 30/1.001, 5 = 30, 6 = 50, 7 = 60/1.001, 80 = 60, 0xf = unspecified), and the like.

Note that "unspecified" is set as a description if the content of an object cannot be examined when it is not determined based only on the interpretations of PSI and SI. In ARIB, especially, since the vertical resolution alone is specified but the horizontal resolution is unspecified, only the vertical resolution can be described.

In the case of an Audio stream, the ESOB_ESI includes an audio coding mode (0 = AC3, 2 = MPEG-1 or MPEG-2 without extension bitstream, 3 = MPEG-2 with extension bitstream, 4 = L-PCM, 0x30 = MPEG-2 AAC, 0x3f = unspecified), sampling frequency (0 = 48 kHz, 1 = 96 kHz, 2 = 192 kHz, 4 = 12 kHz, 5 = 24 kHz, 8 = 32 kHz, 9 = 44.1 kHz, 0xf = Unspecified), the number of audio channels (0 = 1ch (Mono), 1 = 2ch (Stereo), 2 = 3ch, 3 = 4ch, 4 = 5ch, 5 = 6ch, 6 = 7ch, 7 = 8ch, 9 = 2ch (Dual Mono), 0xf = unspecified), and the like.

The ESOB_TMAP includes ESOB_TMAP_GI and one or more pieces of ES_TMAP_GI (not shown). The ESOB_TMAP_GI includes ADR_OFS (a Packet Group number (or logical block (LB) address) from the head of a file to the head of an ESOB), and also includes the following pieces of information. That is, in the case of the PTM base, the ESOB_TMAP_GI is configured to include ESOB_S_PKT_POS (the start position of an ESOB in a first Packet Group: 0 ≤ ESOB_S_PKT_POS ≤ 169), ESOB_E_PKT_POS (the end position of an ESOB in a first Packet Group: 0 ≤ ESOB_E_PKT_POS ≤ 169), ESOB_SZ (ESOB size), and ES_TMAP_GI_Ns (the number of ES_TMAPs that belong to the ESOB of interest).

Each ES_TMAPI_GI includes ESIN (the ESI number of a target ES of the TMAP of interest), ADR_OFS (logical addresses from the head of an ESOB file to the head of the ES of interest), ES_S_PTM (ES start time: start PTM), ES_E_PTM (ES end time: end PTM), ES_ESOBU_ENT_Ns (the number of ESOBU_ENTs), LAST_ESOBu_E_PKT_POS (position of the last ESOBU in a packet group), and STMAP_N (the TMAP number in the STMAPIT, which belongs to the ES of interest: this number may be omitted when TMAPs are recorded in turn in each STMAPT).

The STMAPIT (FIG. 3) is recorded in an independent field (file), and comprises STMAPITI (STMAPIT Information), one or more pieces of STMAPI_GI (STMAPI General Information), one or more ETMAPI_SRPs (ETMAPI Search Pointers), and a plurality of pieces of ETMAPI (ETMAP Information) as many as the number of ETMAPI_SRPs. The Information (STMAPTI) of the STMAPT (corresponding to STMAP#1 to STMAP#n in FIG. 4) includes the end address of the STMAPT, the version information of the STMAP, the number of STMAP search pointers (= the number of the time map search pointer information pieces, or the number of time map information pieces), the update date information (STMAP_LAST_MOD_TM) of the STMAP (which is the same as the update date information of the VMGI or HDVR_MGI), and the number of the STMAPI_GI.

Each of the STMAP#1 to STMAP#n in FIG. 4 includes STMAP general information (STMAP_GI). The STMAP_GI includes the number of ETMAPI search pointers belonging thereto. The ETMAPIs belonging to the STMAP are determined in the number sequence from the first one. The ETMAPI search pointer (ETMAPI_SRP) includes address information to ETMAPI, and the number of ESOBU_ENTs. Here, garbage data (or meaningless data) may exist among ESOBU_ENTs.

In the case of the PATS base (type B), the ESOB_TMAP_GI includes ADR_OFS (a Packet Group number (or logical block (LB) address) from the head of a file to the head of an ESOB), AT_SOBU_TM (arrival time interval of ESOBUs: 0 = 1s, 1 = 2s), ESOB_S_PKT_POS (the start position of an ESOB in a first Packet Group: 0 ≤ ESOB_S_PKT_POS ≤ 169), ESOB_E_PKT_POS (the end position of an ESOB in a first Packet Group: 0 ≤ ESOB_E_PKT_POS ≤ 169), AT_SOBUI_Ns (the number of pieces of AT_SOBUI which belong to the ESOB of interest) or AT_SOBU_ENT_Ns (the number of AT_SOBU entries in the STMAPI of the ESOB of interest), ESOB_SZ (ESOB size), and the like. The edit processing is done for respective AT_SOBUs, and the adjustment processing is done based on PATS start time and PATS end time (CELLI) .

When ESTR_FI (FIG. 5) as management information for digital broadcasting is changed for each broadcasting station (or each broadcasting scheme), a plurality of pieces of ESTR_FI exist. Hence, ESTR_FI_SRPT information (FIG. 3) exists to designate an ESTR_FI file to be used, and its structure includes ESTR_FI_SRPTI and an ESTR_FI_SRP as pointer information to each ESTR_FI. Note that each ESTR_FI_SRP (FIG. 3) includes the file name of ESTR_FI (ESTR_FI_FN), the update date and time information of the ESTR_FI file (ESTR_FI_LAST_MOD_TM), an ESTR_FI file size (ESTR_FI_SZ), AP_FORMAT1 and Country code as broadcasting scheme information, a Packet Type, the number of pieces of ESOBI (ESOBI_Ns), the ESTR_FI size, the STMAP size which belongs to the ESTR_FI of interest, and the like. Note that the update date and time information is also set in the ESTR_FI file. When ESTR_FI is changed upon editing, that value is updated. Upon reproduction, the updated value is compared with the value in the ESTR_FI file. If the two values are the same, reproduction is permitted. The number of pieces of ESTR_FI is four or less, and the number of pieces of ESOBI is 999 or less. A part "nn" of ESTR_FI file name: HR_SFInn.IFO is reflected on that of File Name: HR_STMnn.IFO of the STMAP, thus determining the file name of the STMAP.

However, as content of TS streams, Digital Handycam, various kinds of cable broadcasting, Internet broadcasting, and the like are known in addition to digital broadcasting. The standard of each individual stream can be cognized upon recording, but such standard is not registered in the HD_DVD-VR standard. Although an STC-based TMAP data can be generated, some pieces of information such as ESTR_FI, ESOBI, and the like may not be generated.

To solve this problem, a mode that can generate ESTR_FI, ESOBI, and the like in a format unique to each manufacturer is added to the HD_DVD-VR standard. As characteristic features of these streams, PTS-based TMAP data can be generated since they are cognizable streams, but these streams may not include parameters such as component_tag, NETWORK_ID, SERVICE_TYPE, and the like, which are indispensably included in broadcasting in Japan. In this case, the values of parameter fields which are not used are padded with 0xff.

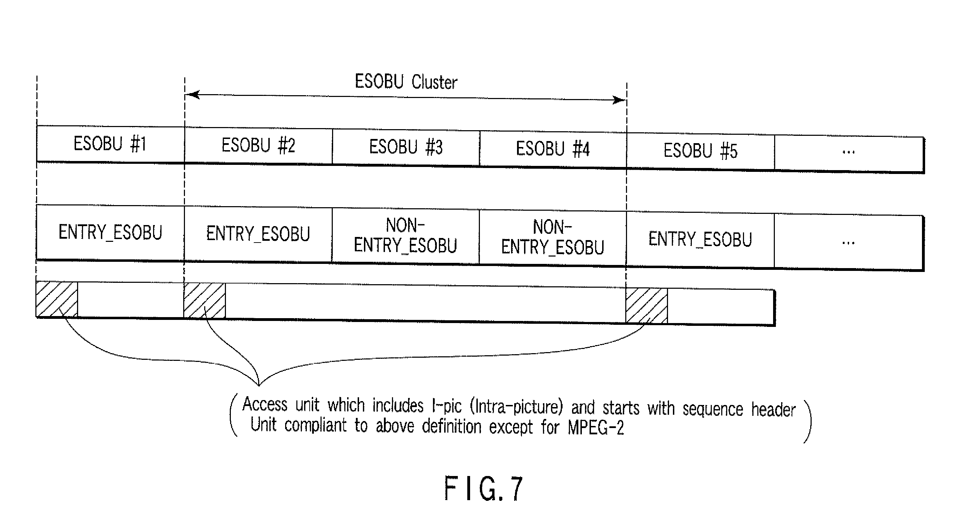

FIG. 7 exemplifies a case in which a set of data units (ESOBU cluster) of a recording object (ESOB) does not include any Non-Intra ESOBUs. The ESOBU cluster means a group of an entry ESOBU and one or more non-entry ESOBUs that follow the entry ESOBU (until the next entry ESOBU or next Non-Intra ESOBU appears). The ESOBU cluster is used, e.g., when a Video Access Point is not found for a long period of time. The ESOBU cluster can be handled in the same manner as one ESOBU except for a case in which information in the ESOBU_ENT of a time map is to be processed.

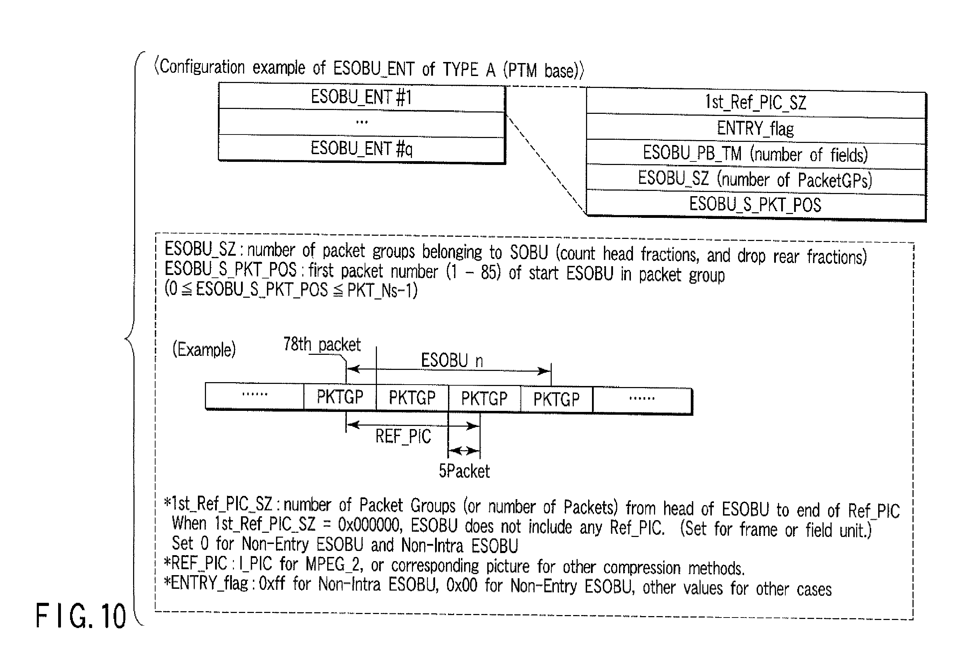

Note that the 1STREF_SZ (1st_Ref_PIC_SZ in FIG. 10) and ENTRY_flag of the ESOBU cluster are the same as those of the entry ESOBU of the ESOBU cluster. The 1STREF_SZ and ENTRY_flag values of all the non-entry ESOBUs assume zero.

The ESOBU size of the ESOBU cluster amounts to a total of the ESOBU_SZ values (FIG. 10) of all ESOBUs which belongs to that cluster. In this case, the size of each ESOBU in the cluster carries no special significance, and the total size is significant.

The ESOBU_S_PKT_POS of the ESOBU cluster is the same as that (FIG. 10) of the entry ESOBU of that cluster. The ESOBU_S_PKT_POS values of all the non-entry ESOBUs assume zero.

The ESOBU_PB_TM of the ESOBU cluster amounts to a total of the ESOBU_PB_TM values (FIG. 10) of all the ESOBUs which belong to that cluster. In this case, the playback time of each ESOBU in the cluster carries no special significance, and the total playback time is significant. Note that the ESOBU_PB_TM values of all ESOBUs which belong to the ESOBU cluster are prevented from becoming zero.

In the example of FIG. 7, the ESOBU cluster is configured by the Entry ESOBU and Non-Entry ESOBUs. The Entry ESOBU starts with a Video Access Packet (not shown), and the payload of this Video Access Packet starts with a Video Access Point of a target video stream.

The default definition of the Video Access Point is as follows. That is, in the case of MPEG-1 or MPEG-2 video, the first byte of a PES packet including an access unit that starts with a sequence header and corresponds to an I-picture is a default Video Access Point (note that the access unit is defined in the MPEG-2 system). In the case of MPEG-4 AVC as a typical example of the high-efficiency encoding scheme adopted by the HDDVD, the first byte of a PES packet including an AVC access unit that starts with an access unit delimiter and a sequence parameter set and corresponds to an I-picture is a default Video Access Point (note that the AVC access unit is defined in the MPEG-2 system). In the case of VC-1 which is adopted by the HDDVD and is one of the high-efficiency encoding schemes, the first byte of a PES packet including an access unit that starts with a Sequence Header and Sequence Start Code followed by an Entry Point Start Code and Entry Point Header and corresponds to an I-picture is a default Video Access Point (the access unit in this case is defined by SMPTE RP227).

Note that first reference picture size (1STREF_SZ or 1st_Ref_PIC_SZ) in the ESOBU entry (corresponding to ESOBU_ENT in FIG. 10) and/or the entry flag (ENTRY_flag) assume or assumes a non-zero value. The value of the ENTRY_flag of the Entry ESOBU does not assume FFh. The ESOBU playback time specified by the ESOBU_PB_TM (FIG. 10) assumes a value which is longer than zero and is equal to or shorter than 2.002 sec.

The Non-Entry ESOBU in FIG. 7 is an access unit which includes a reference picture (I-picture in MPEG-2) at its head position and starts with a sequence header. Other than MPEG-2, a similar access unit which includes a reference picture at its head position becomes a Non-Entry ESOBU.

Note that the Non-Entry ESOBU starts with neither a Video Access Packet nor a Non-Intra Video Access Packet of a target video stream. In the Non-Entry ESOBU, the 1STREF_SZ (lst_Ref_PIC_SZ) and ENTRY_flag values in the ESOBU_ENT assume zero. In the Non-Entry ESOBU, the ESOBU playback time specified by the ESOBU_PB_TM is equal to or shorter than 2.002 sec, but it does not assume zero.

FIG. 8 exemplifies a case in which a set (Non-Intra ESOBU cluster) of data units of a recording object (ESOB) includes Non-Intra ESOBUs. Depending on application formats (digital broadcasting schemes), an I-picture does not exist for a long period of time, or a video stream does not include any I-picture at all in some cases. The Non-Intra ESOBUs and Non-Intra ESOBU cluster are defined in consideration of such situation. The SOBU_MODE shown in FIG. 6 is defined as navigation data indicating the probability of Non-Intra ESOBUs.

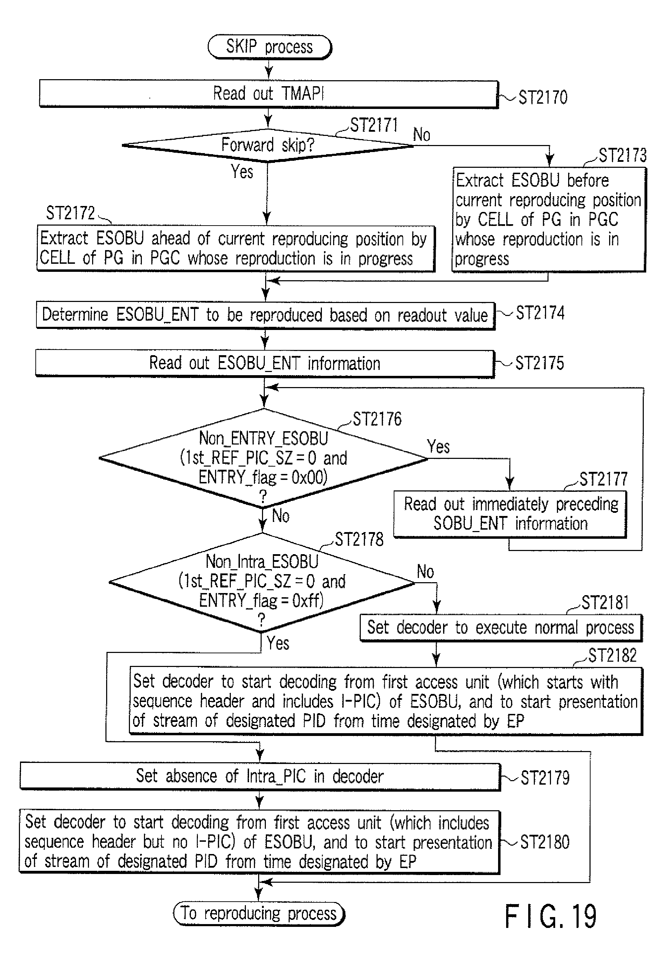

In an apparatus (an HDDVD recorder, HDDVD player, or personal computer installed with HDDVD compatible software) that supports a case in which an I-picture does not exist for a long period of time, or a video stream does not include any I-picture, the performance of special reproducing processing (FIG. 19) such as skip and the like can be enhanced by accessing the start part of the Non-Intra ESOBU.

The Non-Intra ESOBU cluster means a group of a Non-Intra ESOBU and one or more non-entry ESOBUs that follow the Non-Intra ESOBU (until the next entry ESOBU or the next Non-Intra ESOBU appears or to a position before the end of an ESOB). The Non-Intra ESOBU cluster is used, e.g., when a Video Access Point or Non-Intra Video Access Point is not found for a long period of time. The Non-Intra ESOBU cluster can be handled in the same manner as one Non-Intra ESOBU except for a case in which information in the ESOBU_ENT of a time map is to be processed.

The 1STREF_SZ and ENTRY_flag of the Non-Intra ESOBU cluster are used to indicate the type of ESOBU. More specifically, the 1STREF_SZ of the Non-Intra ESOBU assumes zero, and its ENTRY_flag assumes FFh (or 0xff). In the case of non-entry ESOBUs in the Non-Intra ESOBU cluster, the 1STREF_SZ and ENTRY_flag values assume zero (or 0x00).

The ESOBU size of the Non-Intra ESOBU cluster amounts to a total of the ESOBU_SZ values of all the ESOBUs which belong to that cluster. In this case, the size of each ESOBU in the cluster carries no special significance, and the total size is significant.

In the Non-Intra ESOBU cluster, the ESOBU_S_PKT_POS is the same as that of the Non-Intra ESOBU in that cluster, and the ESOBU*_*S*_*PKT_POS values of all the non-entry ESOBUs assume zero.

The ESOBU_PB_TM of the Non-Intra ESOBU cluster amounts to a total of all the ESOBUs which belong to that cluster. In this case, the playback time of each ESOBU in the cluster carries no special significance, and the total playback time is significant. Note that the ESOBU_PB_TM values of all ESOBUs which belong to the Non-Intra ESOBU cluster are avoided from assuming zero.

In the example of FIG. 8, the Non-Intra ESOBU cluster is configured by non-intra SOBUs (Non-Intra ESOBUs), and this Non-Intra ESOBU is an access unit which does not include any reference picture (I-picture in MPEG-2) at its head position but starts with a sequence header. Other than MPEG02, a similar access unit which does not include any reference picture at its head position is a Non-Intra ESOBU.

The Non-Intra ESOBU starts with a Non-Intra Video Access Packet (not shown), and the payload of the Non-Intra Video Access Packet starts with a Non-Intra Video Access Point of a target video stream. The default definition of the Non-Intra Video Access Packet is as follows unless otherwise specified. That is, in the case of MPEG-1 or MPEG-2 video, the first byte of a PES packet including an access unit that starts with a sequence header but does not include any I-picture is a default Video Access Point (note that the access unit is defined in the MPEG-2 system). In the Non-Intra ESOBU, the ESOBU playback time specified by the ESOBU_PB_TM (FIG. 10) does not assume zero and is equal to or shorter than 2.002 sec.

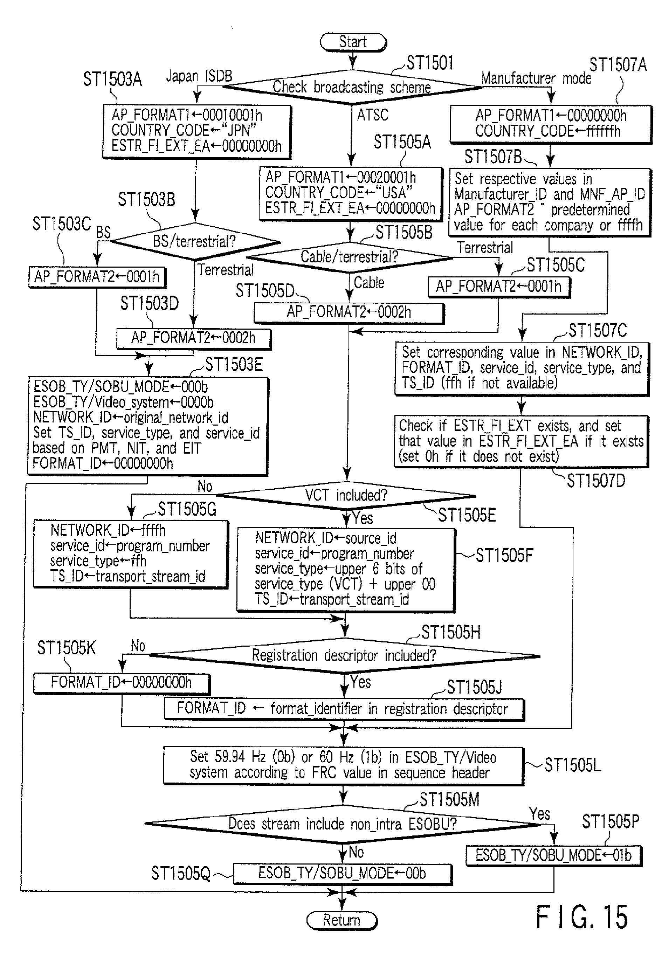

The SOBU_MODE in the ESOB_TY included in the management information (ESOBI/ESOBI_GI in FIG. 6) can described whether or not a stream object (ESOB) can include Non-Intra ESOBUs. For example, when the SOBU_MODE is set to be 01b, one or more Non-Intra ESOBUs can exist in that ESOB. In this case, whether or not to reproduce that ESOB depends on the device design. That is, when the SOBU_MODE is set to be 01b, a player which ignores the whole ESOB can exist. For this reason, it is preferable even for a recorder that can use Non-Intra ESOBUs not to generate any Non-Intra ESOBU and not to set the SOBU_MODE to be 01b (in terms of compatibility) unless the need arises (for example, unless a stream in which an I-picture is not found for a long period of time need be recorded). In this sense, in the embodiment of the invention, not only recording and reproducing of Non-Intra ESOBUs but also those of normal ESOBUs (including an I-picture or reference picture) are allowed (for example, see the processing route in blocks ST1503A to ST1503E in FIG. 15).

Note that not only the SOBU_MODE (FIG. 6) but also the ENTRY_flag (FIG. 10) in the ESOBU_ENT can indicate whether or not one or more Non-Intra ESOBUs exist in that ESOB.

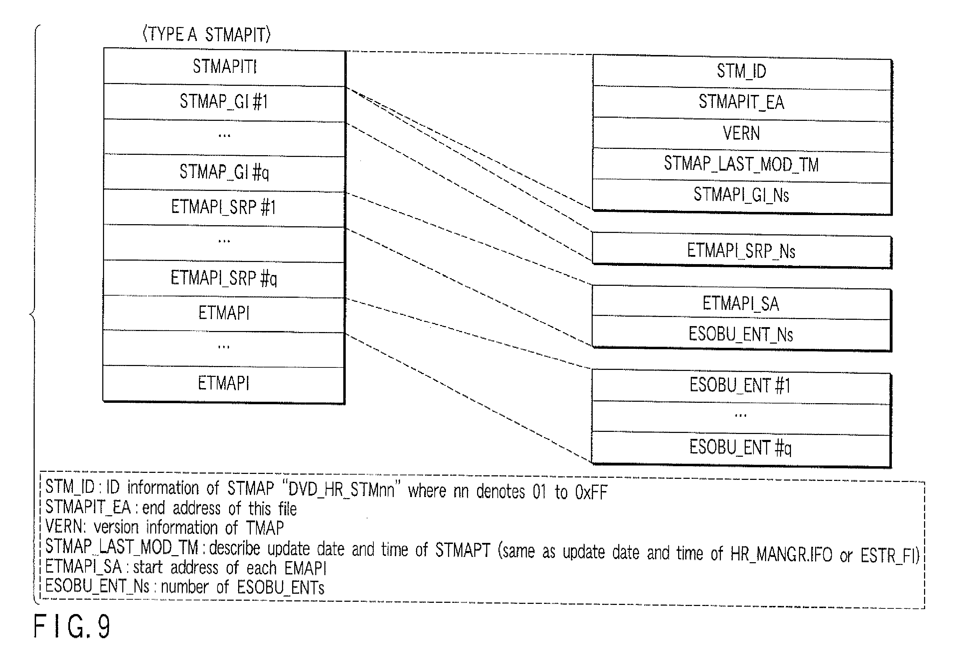

FIG. 9 is a view for explaining an example of the configuration of a stream time map information table (STMAPIT of type A on the playback time base) as a part of the management information. As shown in FIG. 9, the STMAPIT of type A on the PTM base is configured to include STMAPIT identification information (STM_ID), end address information (STMAPIT_EA) of the STMAPIT, version information (VERN) of the TMAP of interest, update date and time information (STMAPI_LAST_MOD_TM: the same value as the update date and time information value of VMGI or ESTR_FI) of the STMAPI, the number of pieces of STMAPI_GI (STMAPI_GI_Ns), and the like. The STMAPI_GI includes the number of ETMAPI_SRPs (ETMAPI_SRP_Ns) which belong to the STMAPI_GI, and ETMAPs which belong to the STMAP are determined in the number sequence from the first one. Each ETMAPI_SRP is configured to include start address information (ETMAPI_SA) to the ETMAPI, and the number of ESOBU_ENTs (ESOBU_ENT_Ns). The ETMAPI includes one or more ESOBU_ENTs. Note that garbage data may be inserted among ESOBU_ENTs.

FIG. 10 is a view for explaining an example of the configuration of entry information of a data unit (ESOBU_ENT of type A) as a part of the management information. The ESOBU_ENT of type A, i.e., of the PTM base is configured to include end address information (LB units) from the head of the ESOBU of the first reference picture (I-picture or the like) in the entry, an ESOBU playback time (the number of fields), an ESOBU size (the number of packet groups that belong to the ESOBU), and ESOBU_S_PKT_POS (the number of packets from the head of a packet group that stores the first packet of the ESOBU of interest).

When the ESOBU of that entry does not include any I-picture (reference picture) (in the case of a Non-Intra ESOBU or Non-Entry ESOBU), the IST_REF_PIC_SZ assumes 00h. Furthermore, the ENTRY_flag assumes 0xff in the case of a Non-Intra ESOBU, and 0x00 in the case of a Non-Entry ESOBU, thereby distinguishing the Non-Intra ESOBU and Non-Entry ESOBU from each other.

There are two types of AT_SOBU_ENTs on the PATS base, i.e., that in a Packet unit and that in a Packet Group unit. In the case of the Packet unit, accurate addresses can be obtained, but the number of data of AT_SOBU_ENTs increases. In the case of the Packet Group unit, the number of data of ESOBU_ENTs is small, but addresses can only specify Packet Groups. In the case of the Packet unit, each AT_SOBU_ENT is configured by AT_SOBU_SZ and AT_SOBU_POS. The AT_SOBU_S_PKT_POS indicates the first packet position of the AT_SOBU in the Packet Group by the number of Packets. In the case of the Packet Group unit, each AT_SOBU_ENT is configured by AT_SOBU_SZ. In this case, AT_SOB_S_PKT_POS and AT_SOB_E_PKT_POS are fixed to zero.

An ESOB_SZ is the number of Packet Groups from a Packet Group to which the head of an AT_SOB belongs to that to which the end of the AT_S08 belongs. An ESOBU1_SZ is the number of Packet Groups from the first Packet Group of an ESOBU to the last Packet Group of the ESOBU. Each ESOBU_S_PKT_POS represents the difference between the divisions of the ESOBU and Packet Group using the number of Packets. Time information of type B is expressed on the PATS base to have ESOB_S_PATS as the ESOB start time, and ESOB_E_PATS as the end time. However, the ESOB_E_PATS is the PATS (arrival start time) of the last Packet of the last Packet group, and is not the last reception end time. The edit processing is done for respective ESOBUs, and the playback start time (CELL_S_PATS of CELLI) is designated. Since the edit processing is done for respective ESOBUs, each ESOB_S_PATS always matches the head of the ESOBU. Note that address offset ADR_OFS is expressed by logical block number LBN from the head of a file to the head of an ESOB.

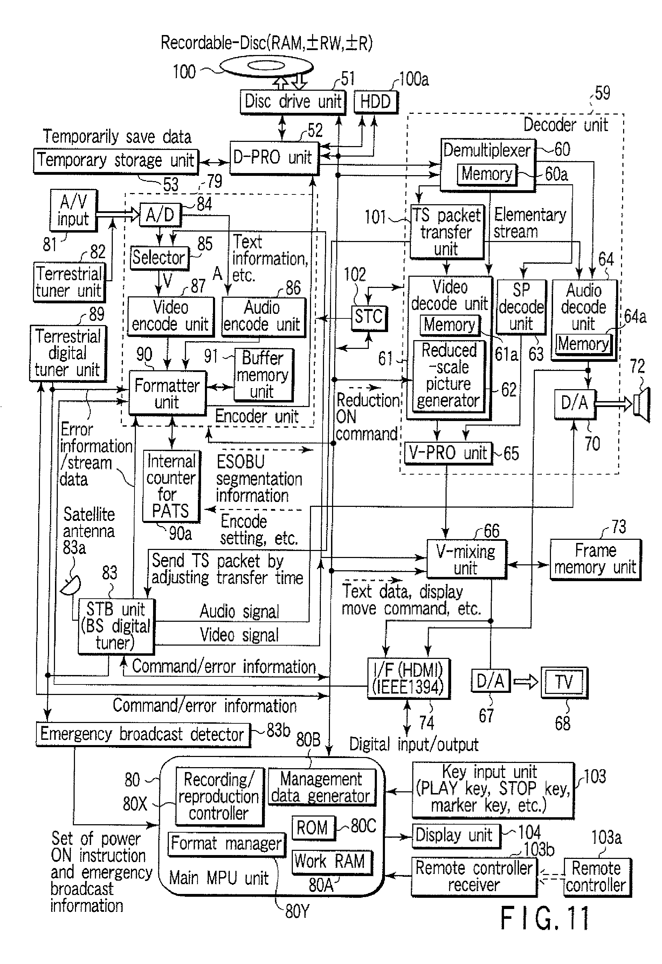

FIG. 11 is a block diagram for explaining an example of an apparatus which records and reproduces AV information (digital TV broadcasting program or the like) on an information recording medium (optical disc, hard disc, or the like) using the data structure according to the embodiment. As shown in FIG. 11, this recording and reproducing apparatus comprises MPU unit 80, display unit 104, decoder unit 59, encoder unit 79, TV tuner unit 82, STC unit 102, D-PRO unit 52, temporary storage unit 53, disc drive unit 51, key input unit 103, video mixing unit 66, frame memory unit 73, TV digital-to-analog conversion unit 67, terrestrial digital tuner unit 89, IEEE 1394 (and/or HDMI) I/F unit 74, Ethernet® I/F unit (not shown), remote controller receiver 104, STB unit (BS digital tuner or the like) 83, emergency broadcast detection unit 83b, HDD unit 100a, and the like. This arrangement is configured by adding the functions of a streamer to a recordable/reproducible DVD recorder.

Encoder unit 79 comprises analog-to-digital conversion unit 84, video encode unit 87, audio encode unit 86, sub-picture encode unit (not shown), formatter unit 90, buffer memory unit 91, and the like. Decoder unit 59 comprises demultiplexer 60, video decode unit 61, sub-picture decode unit 63, audio decode unit 64, TS packet transfer unit 101, V-PRO unit 65, audio digital-to-analog conversion unit 70, and the like. Furthermore, antenna 83a for receiving digital broadcasting is connected to STB unit 83. Note that STC unit 102 is configured to count on a 27-MHz base.

The flow of signals upon recording is as follows. That is, formatter unit 90 packs TS packet data received by STB unit 83 (or terrestrial digital tuner 89) into packet groups and temporarily saves these packet groups on buffer memory unit 91. When the saved packet groups reach a predetermined size, they are recorded on disc 100 and/or HDD 100a. PATS internal counter 90a is connected to this formatter unit 90. The arrival time of each TS packet is counted by PATS counter 90a, and that count value is appended to the head of each TS packet when the packet is buffered in buffer memory unit 91. This counter 90a attains synchronization by finely adjusting count intervals based on PCR (or SCR) values, but never loads the PCR (or SCR) values unlike STC 102.

As the operations to be executed at that time, upon reception of TS packets, a packet group is formed every 170 packets, and a packet group header is generated. In this case, only the upper 2 bytes of the PATS of the first Packet of the Packet Group are stored in the header (FIRST_PATS_EXT), and only the lower 4 bytes of each of other PATS data are saved together with the TS packet (in the PATS before the TS packet). An analog signal input from terrestrial tuner 82 or an line input is converted into a digital signal by analog-to-digital conversion unit 84. That digital signal is input to respective encode units. That is, a video signal is input to video encode unit 87, an audio signal is input to audio encode unit 86, and text data of, e.g., teletext broadcasting is input to the SP encode unit (not shown). In this case, the video signal is compressed by MPEG, the audio signal is compressed by MPEG audio, and the text data is compressed by runlength coding.

Each of the encoder unit (for VR) packs output compressed data to form 2048-byte packets and inputs them to formatter unit 90. Formatter unit 90 packs and multiplexes the packets as a program stream, and sends them to D-PRO unit 52.

D-PRO unit 52 forms ECC blocks for every 16 Logical Blocks, appends error correction data to them, and records the ECC packets on disc 100 (or HDD 100a) via disc drive unit 51. When disc drive unit 51 is busy due to seek, track jump, and the like, recording information is temporarily stored in temporary storage unit 53 until disc drive unit 51 is ready. Furthermore, formatter unit 90 generates each piece of segmentation information during video recording, and periodically sends these pieces of information to MPU unit 80 (GOP head interrupt or the like). The segmentation information includes the number of packs of an EVOBU (ESOBU), the end address of reference picture (I-picture) data from the head of the EVOBU (ESOBU), the playback time of the EVOBU (ESOBU), and the like.

In the flow of signals upon reproduction, data are read out from disc 100 (or HDD 100a) by disc drive unit 51, undergo error correction by D-PRO unit 52, and are then input to decoder unit 59. MPU unit 80 determines the type of input data (i.e., VR or SR data) (based on the cell type), and sets that type in decoder unit 59 before reproduction. In the case of SR data, MPU unit 80 determines the PID to be reproduced based on the ESI number to be reproduced, determines the PIDs of items (video, audio, and the like) to be reproduced based on a PMT, and sets them in decoder unit 59. In decoder unit 59, demultiplexer 60 sends TS packets to the respective decode units 61 to 64 based on the PIDs. Furthermore, demultiplexer 60 sends the TS packets to TS packet transfer unit 101, which transmits them to STB unit 83 (and IEEE1394 I/F unit 74) in accordance with their arrival times in the form of TS packets. Respective decode units 61 to 64 execute decoding, and digital-to-analog conversion unit 67 converts decoded data into an analog signal, thus displaying the signal on TV 68. In the case of VR data, demultiplexer 60 sends data to respective decode units 61 to 64 according to the fixed IDs. Respective decode units 61 to 64 execute decoding, and digital-to-analog conversion unit 67 converts decoded data into an analog signal, thus displaying the signal on TV 68.

In the flow of signals upon recording, formatter unit 90 converts TS packet data received by STB unit 83 (or terrestrial digital tuner 89) into packet groups, and saves the packet groups in work RAM 91. When data stored in this work RAM reach a predetermined size (for one or an integer multiple of CDA size), they are recorded on disc 100 (and/or HDD 100a). As the operations to be executed at that time, upon reception of TS packets, a packet group is formed every 170 packets, and a packet group header (packet group header 161 in FIG. 1H) is generated. That is, the following operation is made.
1) A TS packet is received.
2) It is checked if the STC has reached an end (Wrap-around). If the STC has reached an end, a part (CNT_SEG information: CNT_SEGI) of management information is generated based on its position information. Note that the ESOBI includes discontinuity information ESOB_DCNI of ESOBs (not shown), and this ESOB_DCNI includes one or more pieces of CNT_SEGI. Each CNT_SEGI includes CNT_SEG_SZ (CNT_SEG size: the number of Packet Groups) and CNT_SEG_PKT_POS (the number of Packets of the head position of the CNT_SEG in a Packet Group). From these pieces of information, whether or not the count operation of system time counter STC of the recording and reproducing apparatus has reached an end (Wrap-around) can be indicated. In this manner, the number of CNT_SEGs from the head of an ESOB is set in time information PTM to confirm in advance if STC wrap-around occurs, and such data can be used in TMAP calculations and the like.
3) If the packet of interest is the first one of a packet group, Header_ID: 0x00000fa5 is set; otherwise, the control advances to process 5).
4) The arrival time of the TS packet is used as PATS data, the lower 4 bytes of the PATS data are allocated before that TS packet, and the upper 2 bytes of the first PATS data are set in the Packet Group Header (packet group header 161 in FIG. 1H) as FIRST_PATS_EXT. Then, the process advances to 6).
5) In the TS packet fetched in the TS packet data area, the lower 4 bytes of the PATS data are appended before that TS packet, and the TS packet is set in a Packet Group data area.
6) It is checked if a packet group is formed (if 170 TS packets are grouped). If a packet group is not formed yet, the process returns to 1). If a packet group is formed, CCI processing and MNFI processing are executed, and group data for one packet group are temporarily saved in the buffer RAM.

Upon reproduction, demultiplexer 60 analyzes pack data read out from disc 100 and/or HDD 100a. If a pack stores TS packets, demultiplexer 60 sends TS packets to TS packet transfer unit 101, and then sends them to decoders 61 to 64 to reproduce them. Upon transmitting TS packets to STB unit 83 (or upon transmitting them to an external device such as a digital TV or the like via IEEE1394 or the like), TS packet transfer unit 101 transfers only TS packets at the same time intervals as those upon arrival of these data. STB unit 83 decodes TS packets to generate an AV signal, and displays the AV signal on TV 68 or the like via a video encoder unit in a streamer.

The features of medium 100 (or HDD 100a) used in the apparatus of FIG. 11 will be briefly summarized below. That is, this medium has management area 130 and data area 131. The data area separately records data as a plurality of object data (ESOBs), and each object data includes a group of data units (ESOBUs). One data unit (ESOBU) includes packet groups each of which is formed by converting a MPEG-TS compatible digital broadcasting signal into TS packets and packing a plurality of packets (see FIG. 1). On the other hand, management area 130 has EX_PGC information (EX_PGCI) as information used to manage the reproducing sequence. This EX_PGC information includes cell information (EX_CI). Furthermore, management area 130 has information used to manage object data (ESOB).

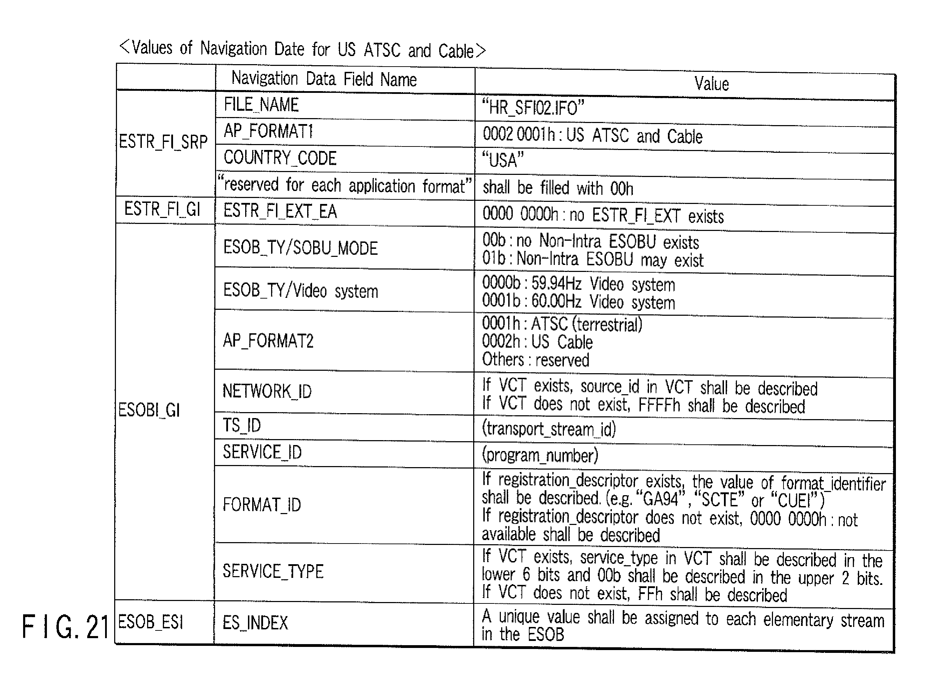

The apparatus shown in FIG. 11 can make stream recording on medium 100 (and/or on HDD 100a) with the above data structure in addition to video recording. In this case, MPU unit 80 is configured to have a service information extraction unit (not shown; firmware that partially configures management data generator 80B), so as to extract program map table PMT and service information SI from a TS packet stream. Also, MPU unit 80 is configured to have an attribute information generation unit (not shown; firmware that partially configures management data generation unit 80B) that generates attribute information (PCR pack number, PCR LB count number, and the like) based on information extracted by the service information extraction unit. MPU unit 80 further comprises firmware that implements the processes of FIG. 21 and the like as format manager 80Y.

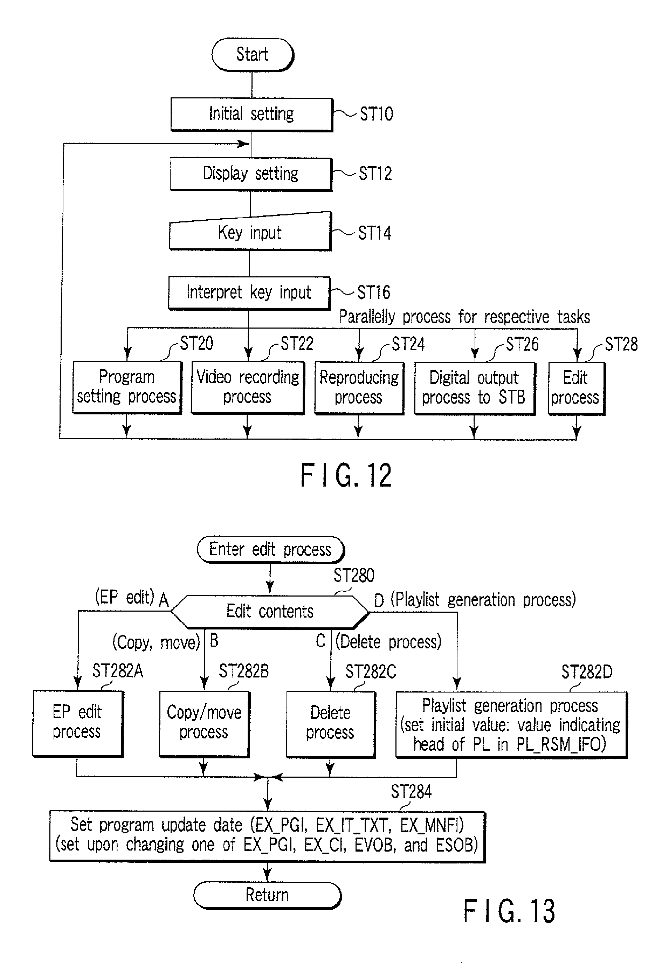

FIG. 12 is a flowchart for explaining an example of the overall operation of the apparatus. In this case, data processes include five different processes, i.e., a video recording process, reproducing process, data transfer process (a digital output process to the STB or the like), program setting process, and edit process. For example, when the power switch of the apparatus in FIG. 11 is turned on, MPU unit 80 makes initial settings (upon factory shipment or after user's settings) (ST10), and also makes display settings (ST12). If the user has made a key input from key input unit 103 or remote controller 103a in FIG. 11 (ST14), MPU unit 80 interprets the content of that key input (ST16). The following five data processes are executed as needed in accordance with this input key interpretation result. That is, if the key input is, for example, a key operation made to set timer program recording, MPU unit 80 enters a program setting process (ST20). If the key input is a key operation made to start video recording, MPU unit 80 enters a video recording process (ST22). If the key input is a key operation made to start reproduction, MPU unit 80 enters a reproducing process (ST24). If the key input is a key input made to output digital data to the STB, MPU unit 80 enters a digital output process (ST26). If the key input is a key operation of an edit process, MPU unit 80 enters the edit process (ST28).

MPU unit 80 parallelly executes the processes in blocks ST20 to ST28 as needed for respective tasks. For example, MPU unit 80 parallelly executes the process for outputting digital data to the STB (ST26) during the reproducing processing (ST24). Or, MPU unit 80 can parallelly execute the new program setting process (ST20) during the video recording processing (ST22) which is not timer program recording. Or, by utilizing the feature of disc recording that allows high-speed access, MPU unit 80 can parallelly execute the reproducing process (ST24) and digital output process (ST26) during the video recording process (ST22). Also, MPU unit 80 can parallelly execute the disc edit process (ST28) during video recording on the HDD.

FIG. 13 is a flowchart (edit operation processing sequence) for explaining an example of the edit process (ST28). When the control enters the edit process, the process branches to one of four processes (one of A to D) (ST280) in accordance with the edit content. Upon completion of one of an entry point menu process (ST282A), copy and move process (ST282B), delete process (ST282C), and playlist generation process (ST282D), MPU unit 80 sets the program update date and time by this edit process in respective pieces of management information (program information EX_PGI, item text information EX_IT_TXT, manufacturer information EX_MNFI) (ST284).

When one of the program information EX PGI, cell information EX_CI, or EVOB or ESOB data has been changed, MPU unit 80 may set this program update date and time. When EVOBI and/or ESOBI have/has been changed, MPU unit 80 can set the edit times/time (EDIT_TIME) of the EVOBI and/or ESOBI in ESOB_EDIT_TIME (not shown) or the like. Alternatively, MPU unit 80 may set this program update date and time.

In this connection, in the process in block ST284, MPU unit 80 may set the manufacturer ID of the apparatus that has made the operation in one of blocks ST282A to ST282D in an editor ID (LAST_MNF_ID: not shown) in management information (VMG). Every time one of the PGI, CI, and ESOB (or EVOB) has been changed, MPU unit 80 can set (or update) this editor ID to the ID information of the apparatus used at that time.

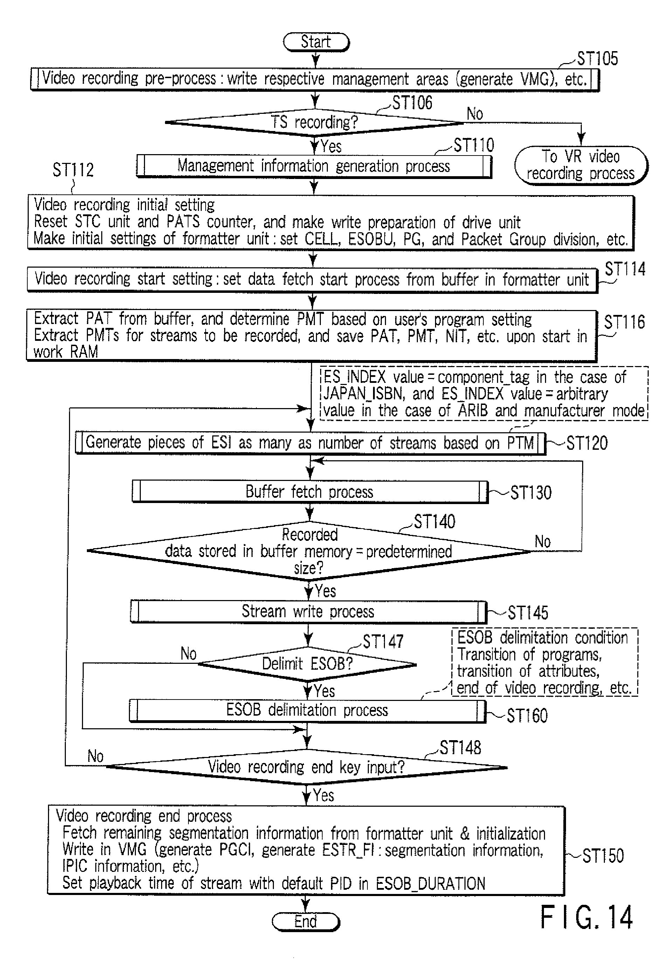

FIG. 14 is a flowchart for explaining an example of the video recording operation. Data processes upon video recording are as follows.
11) MPU unit 80 allows the user to determine a program to be recorded using EPG (Electronic Program Guide) in the program setting process. After that, when the video recording start time has been reached, MPU unit 80 starts reception of that program, and enters video recording of that program.
12) Upon reception of a video recording command from key input unit 103, remote controller 103a, or a program recording program (not shown), MPU unit 80 (FIG. 11) loads management data from disc drive unit 51 (or HDD 100a) and determines a write area. At this time, MPU unit 80 checks the file system to determine whether or not to proceed with video recording (for example, MPU unit 80 checks if the recordable time obtained by converting a non-recorded area size of a recording destination medium based on the video recording rate has a duration long enough to record the program). If video recording can be proceeded, MPU unit 80 determines the recording position (a specific free area of the recording destination medium); otherwise, it displays a message that advises accordingly for the user and aborts the video recording process.
13) MPU unit 80 sets the management area to write data in the determined area, and sets the write start address of video data in the disc drive unit, thus preparing for recording of the program data (ST105). If the program to be recorded is digital broadcasting data (an object is an MPEG-TS stream), is re-encoded to MPEG-PS data, and is recorded in the VR mode (NO in ST106), the control advances to a VR video recording process.
14) If the digital broadcasting data is to be stream-recorded as an MPEG-TS intact (YES in ST106), MPU unit 80 sets management information according to the broadcasting scheme (ST110: details will be described later with reference to FIG. 15).
15) Upon completion of generation of the management information, MPU unit 80 resets the count time of STC unit 102 (FIG. 11) in video recording initial settings (ST112). Note that STC unit 102 is a system timer, and video recording and/or reproduction are or is done with reference to this STC value. MPU unit 80 also makes initial settings in formatter unit 90. In video recording start settings after the initial settings of formatter unit 90, MPU unit 80 begins to fetch data into buffer memory unit 91 (FIG. 11) of the formatter unit (ST114).
16) MPU unit 80 loads the PAT of a program to be recorded to determine the PID used to fetch the PMT of the target program. Then, MPU unit 80 loads the target PMT to determine the PIDs of data (video, audio) to be decoded (to be recorded) (ST116). At this time, MPU unit 80 saves the PAT, PMT, NIT, and the like in work RAM unit 80A, and then writes them in the management information. After completion of video recording, MPU unit 80 writes VMG file data in the file system, and writes the necessary information in VMGI.
17) The description will revert to that of the previous process. MPU unit 80 makes video recording settings in respective units (ST112). At this time, MPU unit 80 makes segmentation settings of respective data and reception settings of TS packets in formatter unit 90. Also, MPU unit 80 sets the PID of data to be recorded to record only a target stream. Furthermore, MPU unit 80 sets buffer 91 to start holding of TS packets.
18) Formatter unit 90 generates ESOB_ESI (FIG. 6) based on the PMT (ST120).
19) Next, formatter unit 90 executes a buffer fetch process (ST130). If data stored in buffer 91 reaches a predetermined size (YES in ST140), formatter unit 90 executes an ECC process via D-PRO unit 52 (FIG. 11), and records the data on disc 100 (and/or HDD 100a) (ST145).
20) During video recording, formatter unit 90 saves segmentation information in work RAM 80A of MPU unit 80 periodically (before buffer RAM 91 becomes full of data). The segmentation information to be saved is ESOBU segmentation information, which includes the ESOBU start address, ESOBU pack length, I-picture end address, playback time, Packet arrival time (PATS), or the like.
21) MPU unit 80 checks if ESOB data are to be delimited. If ESOB data are to be delimited (YES in ST147), MPU unit 80 executes an ESOB delimitation process (ST160).
22) MPU unit 80 checks if video recording is to end (if the user has pressed a video recording end key or if no recordable space remains). If video recording is to end (YES in ST148), MPU unit 80 fetches the remaining segmentation information from formatter unit 90, and adds the fetched information to work RAM BOA. MPU unit 80 records these data in management data (VMGI), records the average recording rate upon video recording, and further records the remaining information in the file system (ST150).
23) If video recording is not to end (NO in ST148), the process returns to block ST120 to continue the data fetch process (ST130) and recording process (ST145).

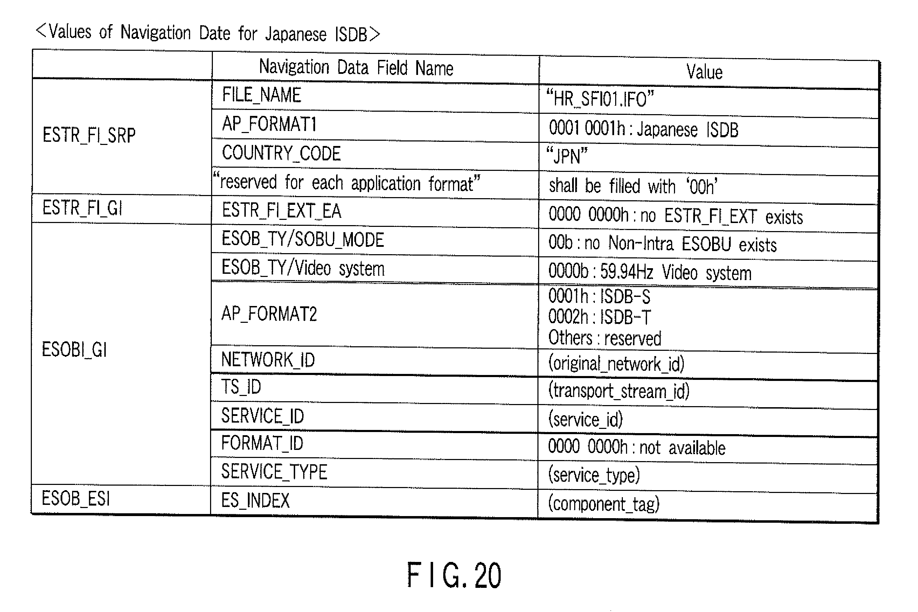

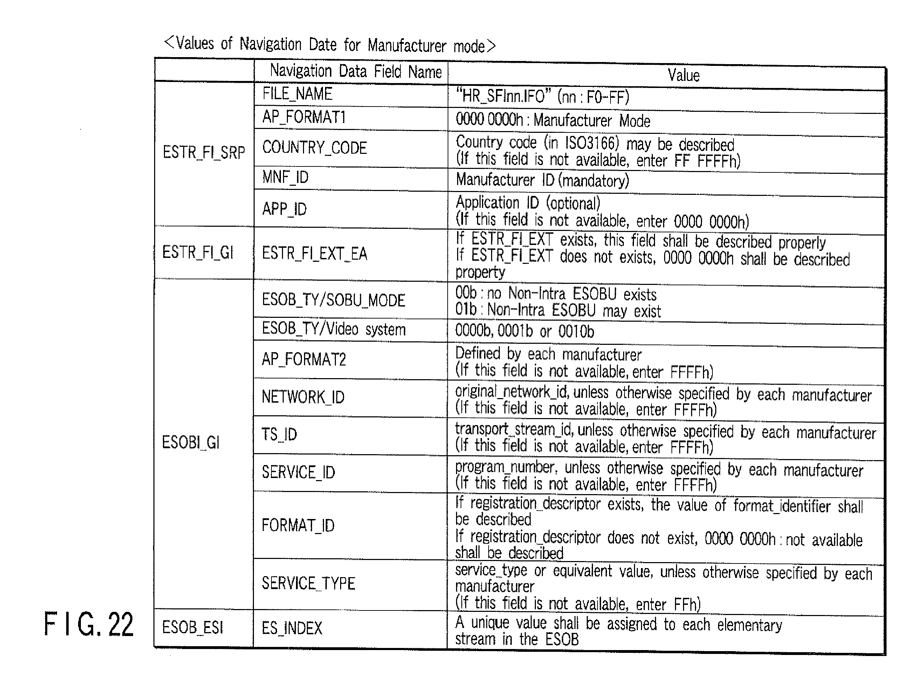

FIG. 15 is a flowchart for explaining an example of the management information generation process. This process corresponds to that in block ST110 in FIG. 14. Upon starting the management information generation process (ST110), MPU unit 80 checks the application format (broadcasting scheme and the like) of a digital stream to be recorded (ST1501). In the embodiment of the invention, three application formats, i.e., Japanese ISDB, US ATSC, and a Manufacturer Mode other than the former formats, are identified. As navigation data for Japanese ISDB, values exemplified in FIG. 20 are used. As navigation data for US ATSC and ISDB for cable broadcasting, values exemplified in FIG. 21 are used. As navigation data for the Manufacturer mode, values exemplified in FIG. 22 are used.
31) In the case of JAPN ISDB as a result of checking the broadcasting scheme in the format check process in block ST1501, MPU unit 80 sets 00010001h in AP_FORMAT1, "JPN" in COUNTRY_CODE, and 00000000h in ESTR_FI_XT_EA (ST1503A). MPU unit 80 then checks if satellite digital broadcasting or terrestrial digital broadcasting is to be received (ST1503B). If BS digital broadcasting is to be received, MPU unit 80 sets 0001h in AP_FORMAT2 (ST1503C). On the other hand, if terrestrial digital broadcasting is to be received, MPU unit 80 sets 0002h in AP FORMAT2 (ST1503D). Furthermore, MPU unit 80 sets 00b in ESOB_TY/SOBU_MODE, 0000b in Video_system, original_NETWORK_ID in NETWORK_ID, sets TS_ID, service_type, and service_id respectively from those in the PMT, NIT, and EIT, and sets 00000000h in FORMAT_ID (ST1503E), thus ending this processing. The control then returns to the process in block ST112 in FIG. 14.
32) In the case of ATSC, MPU unit 80 checks a country code, and sets "USA" in COUNTRY_CODE, 00020001h in AP_FORMAT1, and 00000000h in ESTR_FI_EXT_EA (ST1505A). MPU unit 80 then checks if terrestrial broadcasting or cable broadcasting is to be received (ST1505B). If terrestrial broadcasting is to be received, MPU unit 80 sets 0001h in AP_FORMAT2 (ST1505C). On the other hand, if cable broadcasting is to be received, MPU unit 80 sets 0002h in AP_FORMAT2 (ST1505D).

Next, MPU unit 80 checks if a stream includes a Virtual Channel Table (VCT). If a stream includes a VCT (YES in ST1505E), MPU unit 80 sets source_id in NETWORK_ID, program_number in service_id, and lower 6 bits of service_type in the VCT in service_type while padding its upper 2 bits with "0", and also sets transport_stream_id in TS_ID, respectively (ST1505F). If a stream does not include any VCT (NO in ST1505E), MPU unit 80 sets ffffh in NETWORK_ID, program_number in service_id, ffh in service_type, and transport_stream_id in TS_ID, respectively (ST1505G).

Furthermore, MPU unit 80 checks if the stream includes a registration descriptor. If the stream includes a registration descriptor (YES in ST1505H), MPU unit 80 sets format_identifier in the registration descriptor in FORMAT_ID (ST1505J); otherwise (NO in ST1505H), it sets 00000000h in FORMAT_ID (ST1505K).

MPU unit 80 then checks a sequence header, and sets a corresponding value (0000b for 59.94 Hz or 0001b for 60 Hz) in the Video system according to the FRC value (ST1505L). MPU unit 80 checks if the stream includes a Non-Intra ESOBU. If the stream includes a Non-Intra ESOBU (YES in ST1505M), MPU unit 80 sets 01b in ESOB_TY/SOBU_MODE (ST1505P); otherwise (NO in ST1505M), it sets 00b in ESOB_TY/SOBU_MODE (ST1505Q), thus ending this processing. The control then returns to the process in block ST112 in FIG. 14.
33) In the case of the Manufacturer mode, MPU unit 80 sets 00000000h in AP_FORMAT1, and ffffffffh in COUNTRY_CODE (ST1507A). Then, MPU unit 80 sets a company ID in Manufacturer_ID, a unit ID in MNF_AP_ID, and a value determined for each company or ffffh in AP_FORMAT2 (ST1507B). if NETWORK_ID, TS_ID, service_type, and service_id are respectively used, MPU unit 80 sets corresponding values; if they are not used, it sets ffffh. If the stream includes a registration descriptor, MPU unit 80 sets format_identifier in FORMAT_ID; otherwise, it sets 00000000h in FORMAT_ID (ST1507C). Furthermore, if an ESTR_FI_EXT is available, MPU unit 80 adds the ESTR_FI_EXT, and sets its end address in ESTR_FI_EXT_EA. If no ESTR_FI_EXT is available, MPU unit 80 sets 00000000h in ESTR_FI_EXT_EA (ST1507D).

MPU unit 80 then checks a sequence header, and sets a corresponding value (0000b for 59.94 Hz or 0001b for 60 Hz) in the Video system according to the FRC value (ST1505L). MPU unit 80 checks if the stream includes a Non-Intra ESOBU. If the stream includes a Non-Intra ESOBU (YES in ST1505M), MPU unit 80 sets 01b in ESOB_TY/SOBU_MODE (ST1505P); otherwise (NO in ST1505M), it sets 00b in ESOB_TY/SOBU_MODE (ST1505Q), thus ending this processing. The control then returns the process in block ST112 in FIG. 14.

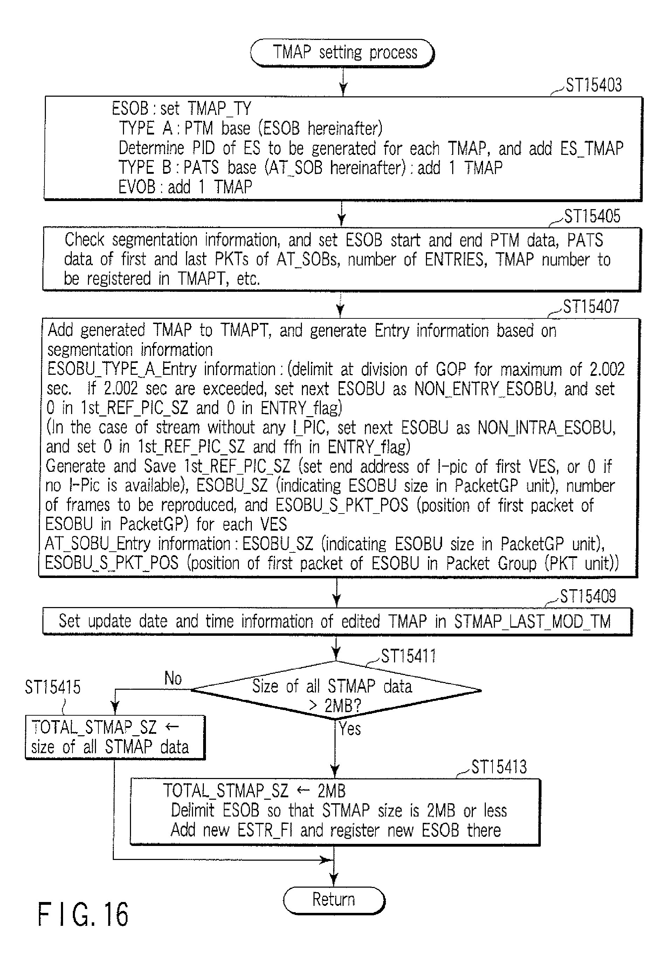

FIG. 16 is a flowchart for explaining an example of the time map setting process. This process corresponds to that in block ST160 in FIG. 14.
41) In the case of an ESOB, MPU unit 80 determines TMAP_TY (ST15403). If this ESOB is of type A on the PTM base, MPU unit 80 determines ESs used to generate an STMAP, sets the number of ESs (the number of video ESs) as the number of TMAPs, and sets ES_PID to be generated for each TMAP.
42) MPU unit 80 sets the ESOB (PTM base) start and end times, the start and end times for each TMAP, the number of entries, the arrival time of the first Packet of the ESOB (PATS base), the arrival time of the last Packet, and the like based on segmentation information (block ST15405).
43) MPU unit 80 adds a TMAPT, and sets, based on segmentation information, ENTRY information (in the case of an ESOB), i.e., 1ST_REF_PIC_SZ (the end address of the first I-pic of a target Video ES; if no I-Pic is available, zero is set), ESOBU_SZ (indicating the ESOBU size by Packet Group units), and ESOBU_S_PKT_POS (the head position of an ESOBU in a Packet Group) for each VIDEO_ES. As ENTRY information in the case of an AT_SOBU, MPU unit 80 sets AT_SOBU_SZ (indicating the ESOBU size by Packet Group units) and AT_SOBU_S_PKT_POS (the position of the first packet of the AT_SOBU in a Packet Group (Packet unit)) (ST15407).
44) MPU unit 80 updates the STMAP edit date (block ST15409).
45) MPU unit 80 checks if the sum total of the STMAP data of the STR_FI of interest exceeds 2MB. If the sum total exceeds 2MB (YES in ST15411), MPU unit 80 sets "2MB" (or the sum value of ESOBs segmented at 2MB) in TOTAL_STMAP_SZ, segments an ESOB not to exceed 2MB to generate new STR FI, and registers new ESOBs in the STR_FI (ST15413), thus ending this processing.
46) If the sum total does not exceed 2MB (NO in ST15411), MPU unit 80 sets the sum total of STMAPs in TOTAL_STMAP_SZ (ST15415), thus ending this processing.

With the above processing, the sum total of STMAPs can be prevented from exceeding 2MB (the upper limit of an available memory size). As a method of setting the STMAP size to fall within 2MB, a method of segmenting an ESOB into two to add another STR_FI as in the above processing, a method of adding another STR_FI without segmenting an ESOB, and registering the ESOB in that information, and a method of broadening the STMAP interval by changing ESOBU_PB_TM_RNG may be used.

In the time map setting process in FIG. 16, the following processes are added upon generation of the ESOBU_ENTRY information in the process in block ST15407.
51) MPU unit 80 checks a stream. If a stream includes an I-picture, the process advances to 52); otherwise, the process jumps to 54).
52) MPU unit 80 checks a GOP duration. If the GOP duration is 2.002 sec or longer, MPU unit 80 sets data within 2.002 sec as one ESOBU, and sets data exceeding 2.002 sec and data up to a division of the next GOP as another ESOBU (Non-Entry ESOBU: see FIG. 7). MPU unit 80 then sets "0" in 1ST_REF_SZ of the other ESOBU, a time period (the number of frames) as that exceeding 2.002 sec in its ESOBU_PB_TM, and the size of the other ESOBU in its ESOBU_SZ. For the previous ESOBU, MPU unit 80 sets 2.002 sec in ESOBU_PB_TM (by the number of frames), 1ST_REF_SZ and ESOBU_SZ as per normal, and a value other than 00 and ffh in ENTRY_FLAG.
53) In the case of an ESOBU that does not exceed 2.002 sec, MPU unit 80 sets 2.002 sec in ESOBU_PB_TM (by the number of frames), the playback time of that GOP in ESOBU_PB_TM as per normal (by the number of frames), the size from the head of the ESOBU to the position of the last TS packet of an I-picture in 1ST_REF_SZ, the size of this ESOBU in ESOBU_SZ, and a value other than 00 and ffh in ENTRY_FLAG.
54) MPU unit 80 checks a GOP duration. If the GOP duration is 2.002 sec or longer, MPU unit 80 sets data within 2.002 sec as one ESOBU, and sets data exceeding 2.002 sec and data up to a division of the next GOP as another ESOBU (Non-Entry ESOBU: see FIG. 8). MPU unit 80 then sets "0" in 1ST_REF_SZ of that ESOBU, a time period (the number of frames) as that exceeding 2.002 sec in its ESOBU_PB_TM, and the size of that ESOBU in its ESOBU_SZ. For the ESOBU (Non-Intra ESOBU) immediately before that ESOBU, MPU unit 80 sets 2.002 sec in ESOBU_PB_TM (by the number of frames), 0 in 1ST_REF_SZ, ESOBU_SZ as per normal, and ffh in ENTRY-FLAG.
55) In the case of an ESOBU (Non-Intra ESOBU) that does not exceed 2.002 sec, MPU unit 80 sets 2.002 sec in ESOBU_PB_TM (by the number of frames), the playback time of that GOP in ESOBU_PB_TM as per normal (by the number of frames), 00 in 1ST_REF_SZ, the size of this ESOBU in ESOBU_SZ, and a value "ffh" in ENTRY_FLAG.

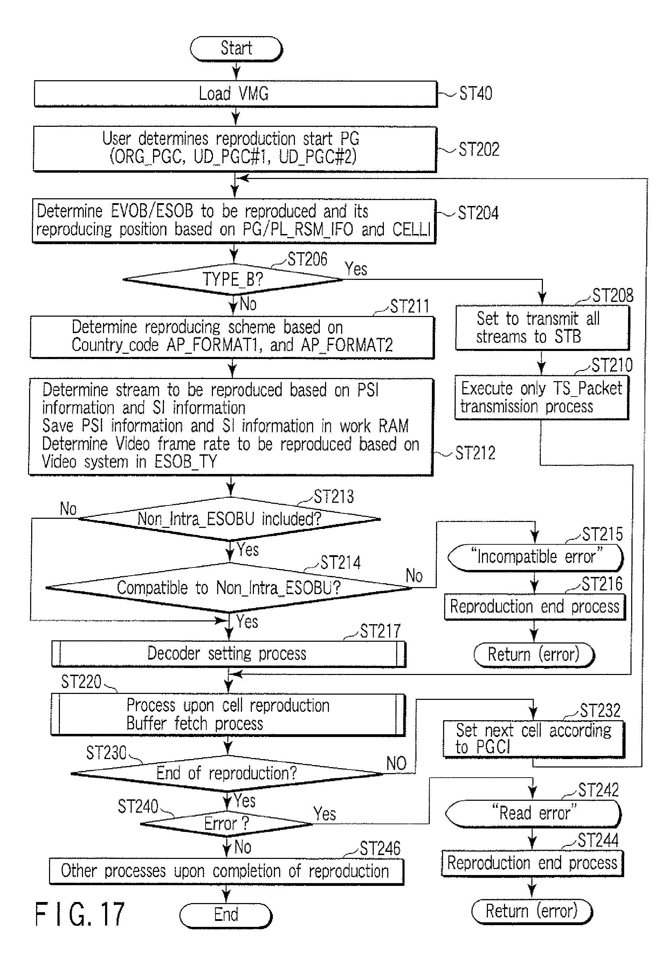

FIG. 17 is a flowchart for explaining an example of the reproducing operation. The data processes upon reproduction are as follows.
61) MPU unit 80 loads a VMG file (ST40) and determines programs and cells to be reproduced (by prompting the user to select them) (block ST202). In this case, if reproducing processing in the recorded order is selected, reproduction is made according to ORG_PGCI; if reproducing processing for each program is to be made, reproduction is made according to UD_PGC with a number corresponding to the program to be reproduced.
62) MPU unit 80 reads out the value of PKT_TY to check if a broadcasting scheme is compatible. If a broadcasting scheme is incompatible, MPU unit 80 displays a message that advises accordingly and ends the processing. (Or the control advances to the process for the next cell).
63) MPU unit 80 determines an SOB or VOB to be reproduced, playback start PTM, and the like based on title information to be reproduced (if PSI information and SI information are unknown, MPU unit 80 sets to execute only the transfer process to the STB), resume information (PL_RSM_IFO, PG_RSM_IFO), and the like, and determines a playback start file pointer (logical address) and ESI of a stream to be reproduced based on the playback start PTM (ST204).
64) MPU unit 80 checks type A or type B (ST206). In the case of type B, MPU unit 80 sets to transfer all streams to the STB (ST208) and to execute the transmission process of TS packet alone (ST210). The process then jumps to block ST220.
65) MPU unit 80 determines a broadcasting scheme based on COUNTRY_CODE, AP_FORMAT1, and AP_FORMAT2 (ST211). (For example, USA and South Korea adopt ARIB. On the other hand, Japan and Brazil adopt ISDB.)
66) MPU unit 80 makes preparation for reproduction by determining a frame rate based on ESOB_TY/Video System (FIG. 6 etc.), and making initial settings of the respective decoder units based on STI and ESI values (ST212).
67) MPU unit 80 checks based on the value of ESOB_TY/SOBU_MODE if a stream includes a Non-Intra ESOBU. If a stream includes a Non-Intra ESOBU (YES in ST213), and if a recorder does not support such Non-Intra ESOBU (NO in ST214), MPU unit 80 displays an alert dialog "no support for reproduction of this stream" or the like (ST215), thus ending this processing (ST216).
68) If a stream does not include any Non-Intra ESOBU (NO in ST213) or if the recorder supports the Non-Intra ESOBU even if the stream includes such Non-Intra ESOBU (YES in ST214), MPU unit 80 executes a playback start process.
69) MPU unit 80 makes settings of the respective decoders (ST217).
70) MPU unit 80 executes a cell reproducing process (ST220), and checks if reproduction is to end (ST230). If reproduction is to end (YES in ST230), MPU unit 80 executes an error check process. If any error is found (YES in ST240), MPU unit 80 displays a message that advises accordingly (ST242), and ends the reproducing process (ST244). If no error is found (NO in ST240), MPU unit 80 executes a normal reproduction end process (ST246), thus ending this operation.
71) If reproduction is not to end (NO in ST230), MPU unit 80 determines the next cell based on the PGCI (ST232), and checks if the decoder settings have been changed. The process then returns to blocks ST204 to ST212. If the decoder settings have been changed, MPU unit 80 sets changed attributes in the decoders so as to change the decoder settings in response to the next sequence end code (ST217).

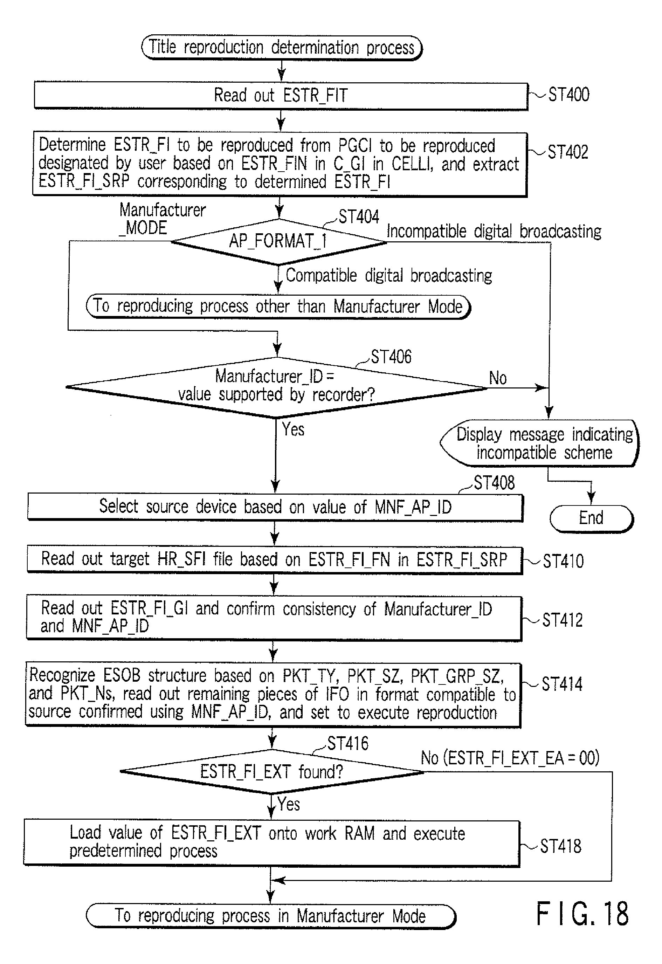

FIG. 18 is a flowchart for explaining a tile reproduction determination process. In the embodiment of the invention, since a plurality of FSTR_FI structures exist upon reproduction, it has to be checked if the recorder to be used supports reproduction. The determination process for this purpose is as follows.
81) MPU unit 80 reads out PGCI and an ESIT_FIT (ST400), determines ESTR_FI to be reproduced based on information C GI in CELLI in the PGCI, and reads out an ESTR_FI_SRP in correspondence with that information (ST402).
82) MPU unit 80 checks the value of AP_FORMAT1 in the ESTR_FI_SRP (FIG. 3 etc.) (ST404). If that value indicates compatible digital broadcasting, MPU unit 80 executes the reproducing process of the conventional standard (that other than Manufacturer_MODE). If that value indicates incompatible digital broadcasting, MPU unit 80 displays a message that advises accordingly, and ends this processing. If that value indicates a stream to be handled by the embodiment of the invention, which is applicable to the TS standard other than digital broadcasting (Manufacturer_MODE), the control advances to the next process.
83) MPU unit 80 checks the Manufacturer_Id (FIG. 3 etc.). If that value indicates an ID supported by the recorder (YES in ST406), the control advances to the next process; otherwise (NO in ST406), MPU unit 80 displays a message that advises accordingly, and ends this processing.
84) MPU unit 80 selects a source device based on the MNF_AP_ID value (ST408).
85) MPU unit 80 reads out ESTR_FI according to the ESTR_FI_SRP (ST410), and confirms the consistency of the Manufacturer_ID and MNF_AP_ID in ESTR_FI_GI (ST412).
86) MPU unit 80 recognizes the ESOB structure based on PKT_TY, PKT_SZ, PKT_GRP_SZ, and PKT_Ns data, reads out the remaining pieces of IFO in the format compatible to a source confirmed based on MNF_AP_ID data, and checks the ESTR_FI_EXT_EA if an ESTR_FI_EXT exists. If the ESTR_FI_EXT is found, MPU unit 80 reads out the data onto the work RAM and sets to execute the reproducing process (ST414).
87) If the ESTR_FI_EXT is found (YES in ST416), MPU unit 80 loads that value onto its work RAM 80A to execute processing based on the loaded value (ST418), and the control advances to the reproducing process in the Manufacturer_MODE. If no ESTR_FI_EXT is found (NO in ST416), the control skips the process in step S418 and advances to the reproducing process in the Manufacturer_MODE.

FIG. 19 is a flowchart for explaining an example of skip processing. The SKIP processing upon pressing of a SKIP key of a remote controller or the like (not shown) upon reproduction will be described below.
91) MPU unit 80 reads out STMAPI to confirm the current reproducing position, reads out information of entry point EP before or after that position, and then loads time map information (ST2170).
92) MPU unit 80 checks the SKIP direction (determined by the type of SKIP key). If the SKIP direction is a forward direction (YES in ST2171), MPU unit 80 loads a (future) ESOBU located after the current reproducing position (ST2172). If the SKIP direction is a backward direction (NO in ST2171), MPU unit 80 loads a (past) ESOBU before the current reproducing position (ST2173).
93) MPU unit 80 determines an ESOBU_ENT to be reproduced based on the readout value (ST2174).
94) MPU unit 80 loads ESOBU_ENT information (see FIG. 4 or 10) (ST2175) to determine a playback start time (STC). In this case, MPU unit 80 searches for an ESOBU cluster (see FIG. 7 or 8) to start reproduction there.
95) MPU unit 80 checks if an ESOBU at the playback start timing is a Non-Entry ESOBU (if Ist_REF_PIC_SZ = 0 and ENTRY_flag = 0x00). If the ESOBU is a Non-Entry ESOBU (YES in ST2176), MPU unit 80 reads out information of an ESOBU immediately before the Non-Entry ESOBU (ST2177) to repeat the processes in blocks S2176 and S2177.
96) In this process, if the ESOBU which is not a Non-Entry ESOBU starts (NO in ST2176), MPU unit 80 checks if that ESOBU is a Non-Intra ESOBU (if 1st_REF_PIC_SZ = 0 and ENTRY_flag = 0xff). If that ESOBU is a Non-Intra ESOBU (YES in ST2178), MPU unit 80 sets that information in respective units of decoder 59 (FIG. 11) (ST2179).
97) MPU unit 80 sets the decoder to start decoding from the first access unit (which includes a sequence header but does not include any I-picture) of the Non-Intra ESOBU, and to start presentation of a stream of the designated PID from the playback time designated by entry point EP (ST2180). The control then advances to the reproducing process.
98) If the ESOBU is not a Non-Intra ESOBU, i.e., it is a normal ESOBU including an I-picture (NO in ST2178), MPU unit 80 sets that information in respective units of decoder 59 (FIG. 11) (ST2181).
99) MPU unit 80 sets the decoder to start decoding from the first access unit (which starts with a sequence header and includes an I-picture) of that ESOBU, and to start presentation of a stream of the designated PID from the playback time designated by entry point EP (ST2182). The control then advances to the normal reproducing process.

With the above processing, flexible control operation corresponding to TS-compatible content other than digital broadcasting can be implemented.

### <Correspondence Example of Embodiment and Invention>

### <Information Recording Medium (Part 1)...Information Indicating Presence/absence of Non-Intra ESOBU>

An information recording medium (optical disc or HDD), which has a management area (130) and a data area (131 to 133), and records an MPEG digital stream signal, is configured so that
the data area separately records data of the digital stream signal as a plurality of objects (ESOBs, etc.), each of which is separately recorded as one or more data units (ESOBUs), and the management area (130) records predetermined management information (HR_SFInn.IFO, HR_STMnn.IFO) used to manage recorded data in the data area, and
the management information has specific information (SOBU_MODE in FIGS. 6 and 20 to 22; ENTRY_flag in FIGS. 4 and 10) indicating whether or not the object (ESOB) includes a data unit (Non-Intra ESOBU) which does not include any reference picture or I-picture (Intra-Picture) of the MPEG.

### <Information Recording Medium (Part 2)...ESOB_TY/SOBU MODE>

In the information recording medium, the management information includes object type information (ESOB_TY) that describes a type of the object, and the object type information describes the specific information (SOBU_MODE in FIGS. 6 and 20 to 22).

### <Information Recording Medium (Part 3) ... ESOBU_ENT/ENTRY_flag>

In the information recording medium, the management information includes entry information (ESOBU_ENT) including information indicating a playback start time (ESOBU_PB_TM) or a playback start position (ESOBU_S_PKT_POS) of the data unit, and this entry information describes the specific information (ENTRY_flag in FIGS. 4 and 10).

### <Information Recording Medium (Part 4) ... ESTR FI EXT EA, ESTR FI EXT>

In the information recording medium, the management information includes an extended field (ESTR_FI_EXT) to which manufacturer unique information (of the information recording medium), which is valid in a predetermined manufacturer mode (in a Manufacturer mode in which an ESTR_FI_EXT_EA is other than "0"), is configured to be appended, and this extended field describes the specific information (SOBU_MODE in FIGS. 6 and 20 to 22).

### <Recording Method Using the Aforementioned Information Recording Medium (Part 1)>

A recording method using an information recording medium which has a management area and a data area and records an MPEG digital stream signal, and which is configured so that the data area separately records data of the digital stream signal as a plurality of objects, each of which is separately recorded as one or more data units, the management area records predetermined management information used to manage recorded data in the data area, and the management information has specific information indicating whether or not the object includes a data unit which does not include any reference picture or I-picture of the MPEG, the method comprises:
recording a digital stream signal of the object (ESOB) in the data area (ST145 in FIG. 14); and
describing, when the digital stream signal of the object (ESOB) includes a data unit (Non-Intra ESOBU) that does not include any reference picture or 1-picture of the MPEG (YES in ST1505M in FIG. 15), information (01b) indicating that the object (ESOB) includes the data unit (Non-Intra ESOBU) that does not include any reference picture or I-picture of the MPEG in the management information (HR_SFInn.IFO) (ST1505P in FIG. 15).

### <Recording Method Using the Aforementioned Information Recording Medium (Part 2)>

In the recording method, the management information includes object type information (ESOB_TY) that describes a type of the object, and the object type information describes the specific information (SOBU_MODE in FIGS. 6 and 20 to 22).

### <Reproducing Method Using the Aforementioned Information Recording Medium (Part 1)>

A reproducing method using an information recording medium which has a management area and a data area and records an MPEG digital stream signal, and which is configured so that the data area separately records data of the digital stream signal as a plurality of objects, each of which is separately recorded as one or more data units, the management area records predetermined management information used to manage recorded data in the data area, and the management information has specific information indicating whether or not the object includes a data unit which does not include any reference picture or I-picture of the MPEG, the method comprises:
reading the management information (ST40 in FIG. 17); and
changing, when the specific information in the read management information indicates that the object includes a data unit (Non-Intra ESOBU) that does not include any reference picture or I-picture of the MPEG (YES in ST213, YES in ST214), a setting method of operations of a decoder used to decode data to be reproduced depending on whether or not the data to be reproduced is included in the data unit (Non-Intra ESOBU) that does not include any reference picture or I-picture of the MPEG (YES or NO in ST2178 in FIG. 19) (ST2179 or ST2181).

### <Reproducing Method Using the Aforementioned Information Recording Medium (Part 2)>

In the reproducing method, the management information includes object type information (ESOB_TY) that describes a type of the object, and the object type information describes the specific information (SOBU_MODE in FIGS. 6 and 20 to 22).

### <Recording Apparatus Using the Aforementioned Information Recording Medium>

A recording apparatus using an information recording medium which has a management area and a data area and records an MPEG digital stream signal, and which is configured so that the data area separately records data of the digital stream signal as a plurality of objects, each of which is separately recorded as one or more data units, the management area records predetermined management information used to manage recorded data in the data area, and the management information has specific information indicating whether or not the object includes a data unit which does not include any reference picture or I-picture of the MPEG, the apparatus comprises:
an object recorder unit (encode system 79 and drive system units 51 to 53 on the left side of FIG. 11) configured to record a digital stream signal of the object (ESOB) in the data area; and
a management information recorder unit (MPU 80 and drive system units 51 to 53 which execute processes in ST1505M (YES) to ST1505P in FIG. 15) configured to record, when the digital stream signal of the object (ESOB) includes a data unit (Non-Intra ESOBU) that does not include any reference picture or I-picture of the MPEG, information (01b) indicating that the object (ESOB) includes the data unit (Non-Intra ESOBU) that does not include any reference picture or I-picture of the MPEG in the management information (HR_SFInn.IFO).

### <Reproducing Apparatus Using the Aforementioned Information Recording Medium>

A reproducing apparatus using an information recording medium which has a management area and a data area and records an MPEG digital stream signal, and which is configured so that the data area separately records data of the digital stream signal as a plurality of objects, each of which is separately recorded as one or more data units, the management area records predetermined management information used to manage recorded data in the data area, and the management information has specific information indicating whether or not the object includes a data unit which does not include any reference picture or I-picture of the MPEG, the apparatus comprises:
a management information reader unit (MPU 80 and drive system units 51 to 53 which execute ST40 etc. in FIG. 17) configured to read the management information;
a decoder controller (MPU 80 in FIG. 11 which executes ST2178, ST2179, ST2181, etc. in FIG. 19) configured to change, when the specific information in the read management information indicates that the object includes a data unit (Non-Intra ESOBU) that does not include any reference picture or I-picture of the MPEG (YES in ST213, YES in ST214), a setting method of operations of a decoder used to decode data to be reproduced depending on whether or not the data to be reproduced is included in the data unit (Non-Intra ESOBU) that does not include any reference picture or I-picture of the MPEG (YES or NO in ST2178 in FIG. 19); and
a reproducer unit (decode system 59 on the right side of FIG. 11 and drive system units 51 to 53) configured to reproduce a digital stream signal of the object (ESOB) according to settings of the decoder.

## Claims

1. A machine readable information recording medium, which is accessed by an hardware and includes a management area and a data area, and records an MPEG digital stream signal, **characterized in that**
the data area is configured to separately record data of the digital stream signal as a plurality of data objects, each of which is separately recorded as one or more data units,
the management area is configured to record predetermined management information used to manage recorded data in the data area, and
the management information (HR_SFInn.IFO; or ESTR_FI/ESOBI) has specific information (Entry_flag or SOBU-MODE) indicating whether or not the data object includes a data unit (Non-Intra ESOBU) which does not include any reference picture or I-picture of the MPEG.

2. The medium according to claim 1, **characterized in that** the management information includes object type information (ESOB_TY) that describes a type of the data object, and the object type information (ESOB_TY) describes the specific information (SOBU_MODE).

3. The medium according to claim 1. **characterized in that** the management information includes entry information (ESOBU_ENT) including information (ESOBU_S_PKT_POS) indicating a playback start time or a playback start position of the data unit, and this entry information (ESOBU_ENT) describes the specific information (Entry_flag).

4. The medium according to claim 1, **characterized in that** the management information includes an extended field (ESTR_FI_EXT) to which manufacturer unique information, which is valid in a predetermined manufacturer mode, is configured to be appended, and the extended field (ESTR_FI_EXT) describes the specific information (SOBU_MODE).

5. A recording method using an information recording medium which has a management area and a data area and records an MPEG digital stream signal, and which is configured so that the data area separately records data of the digital stream signal as a plurality of data objects, each of which is separately recorded as one or more data units, the management area records predetermined management information used to manage recorded data in the data area, and the management information has specific information (Entry_flag or SOBU_MODE) indicating whether or not the data object includes a data unit which does not include any reference picture or I-picture of the MPEG, the method **characterized by** comprising:
recording (ST145 in FIG. 14) a digital stream signal of the data object in the data area; and
describing (ST1505P in FIG. 15), when the digital stream signal of the data object includes a data unit that does not include any reference picture or I-picture of the MPEG, information (SOBU_MODE = 01b) indicating that the data object includes the data unit (Non-Intra ESOBU) that does not include any reference picture or I-picture of the MPEG in the management information.

6. The method according to claim 5, **characterized in that** the management information includes object type information (ESOB_TY) that describes a type of the data object, and the object type information describes the specific information (SOBU_MODE).

7. A reproducing method using an information recording medium which has a management area and a data area and records an MPEG digital stream signal, and which is configured so that the data area separately records data of the digital stream signal as a plurality of data objects, each of which is separately recorded as one or more data units, the management area records predetermined management information used to manage recorded data in the data area, and the management information has specific information (Entry_flag or SOBU_MODE) indicating whether or not the data object includes a data unit which does not include any reference picture or I-picture of the MPEG, the method **characterized by** comprising:
reading (ST40 in FIG. 17) the management information; and
changing (yes or no at ST2178 in FIG. 19), when the specific information in the read management information indicates that the data object includes a data unit that does not include any reference picture or I-picture of the MPEG, a setting method (ST2179 or ST2181) of operations of a decoder used to decode data to be reproduced depending on whether or not the data to be reproduced is included in the data unit that does not include any reference picture or I-picture of the MPEG.

8. The method according to claim 7, **characterized in that** the management information includes object type information (ESOB_TY) that describes a type of the data object, and the object type information describes the specific information (SOBU_MODE).

9. A recording apparatus configured to use the information recording medium as defined in claim 1, **characterized by** comprising:
an object recorder unit (79, 51-53 in FIG. 11) configured to record a digital stream signal of the data object in the data area; and
a management information recorder unit (80, 51-53 in FIG. 11) configured to record, when the digital stream signal of the data object includes a data unit that does not include any reference picture or I-picture of the MPEG, information (SOBU_MODE = 01b) indicating that the data object includes the data unit (Non-Intra ESOBU) that does not include any reference picture or I-picture of the MPEG in the management information.

10. A reproducing apparatus configured to use the information recording medium as defined in claim 1, **characterized by** comprising:
a management information reader unit (80, 51-53 in FIG. 11) configured to read the management information;
a decoder controller (80 in FIG. 11) configured to change, when the specific information in the read management information indicates that the data object includes a data unit that does not include any reference picture or I-picture of the MPEG, a setting method of operations of a decoder used to decode data to be reproduced depending on whether or not the data to be reproduced is included in the data unit that does not include any reference picture or I-picture of the MPEG; and
a reproducer unit (59, 51-53 in FIG. 11) configured to reproduce a digital stream signal of the data object according to settings of the decoder.
